# EUROPÄISCHE PATENTANMELDUNG

(11) **EP 3 012 129 A2**
(43) Veröffentlichungstag der Anmeldung: **27.04.2016**
(21) Anmeldenummer: 15191068.4
(22) Anmeldetag: 22.10.2015
(51) Int. Cl.: B60D 1/06, B60R 9/06

(54) **HECKTRÄGERKUPPLUNG**

(30) Priorität: 23.10.2014 DE 102014115434
(71) Anmelder: Zech, Burkhard, 86441 Zusmarshausen (DE)
(72) Erfinder: Zech, Burkhard, 86441 Zusmarshausen (DE)
(74) Vertreter: Otten, Roth, Dobler & Partner mbB Patentanwälte

(57) **Zusammenfassung**

Die Erfindung betrifft eine Heckträgerkupplung (1), wobei die Heckträgerkupplung (1) an einer als Kugelkopfkupplung (101) ausgebildeten Anhängerkupplung eines Fahrzeugs (151) montierbar ist. Hierbei umfasst eine untere Klemmeinrichtung (5) wenigstens zwei Spannbacken (6, 7), wobei die Spannbacken (6, 7) im montierten Zustand der Heckträgerkupplung (1) an einem zweiten Abschnitt (103b) eines Halses (103) der Kugelkopfkupplung (101) derart anliegen, dass ein Nicken der Heckträgerkupplung (1) um eine quer zur Fahrtrichtung orientierte Querachse (Q102) des Kugelkopfes (102), ein Wanken der Heckträgerkupplung (1) um eine in die Fahrtrichtung (F151) verlaufende Längsachse (L102) des Kugelkopfes (102) und ein Gieren der Heckträgerkupplung (1) um die Mittelachse (M102) des Kugelkopfes (102) jeweils durch eine beidseitige Anlage der Spannbacken (6, 7) an dem zweiten Abschnitt (103b) des Halses (103) verhindert ist.

## Beschreibung

Die Erfindung betrifft eine Heckträgerkupplung gemäß dem Oberbegriff des Anspruchs 1 bzw. 6.

Aus der DE 199 22 752 B4 ist eine Heckträgerkupplung bekannt, welche an einer als Kugelkopfkupplung ausgebildeten Anhängerkupplung eines Fahrzeugs montierbar ist, wobei die Kugelkopfkupplung einen Hals und eine an einem ersten Ende des Halses angeordneten Kugelkopf umfasst, wobei der Hals einen ersten, kugelkopfnahen Abschnitt umfasst, welcher eine gemeinsame Mittelachse mit dem Kugelkopf aufweist, welche im Wesentlichen senkrecht zu einer Fahrtrichtung des Fahrzeugs ausgerichtet ist, wobei der Hals einen zweiten Abschnitt umfasst, welcher auf den ersten Abschnitt folgt und wenigstens abschnittweise gebogen verläuft, wobei die Heckträgerkupplung eine obere Klemmeinrichtung, eine untere Klemmeinrichtung und mindestens eine die Klemmeinrichtungen starr verbindende Flanscheinrichtung umfasst und wobei die obere Klemmeinrichtung an den Kugelkopf anklemmbar ist. Derartige Heckträgerkupplungen zeigen zwar eine verbesserte Anbindung an die Kugelkopfkupplung. Bei starken fahrdynamischen oder statischen Belastungen besteht jedoch weiterhin die Gefahr, dass die Heckträgerkupplung ihre Position gegenüber der Anhängerkupplung verändert und ein mit der Heckträgerkupplung verbundener Heckträger eine ungewünschte Ausrichtung zu dem Fahrzeug einnimmt.

Weiterhin ist aus der DE 42 11 180 A1 eine Heckträgerkupplung bekannt, wobei die Heckträgerkupplung an einer als Kugelkopfkupplung ausgebildeten Anhängerkupplung eines Fahrzeugs montierbar ist und an einem Kugelkopf und einem Hals der Kugelkopfkupplung befestigt wird.

Es ist Aufgabe der Erfindung, eine Heckträgerkupplung vorzuschlagen, welche auch bei hohen fahrdynamischen oder statischen Belastungen ihre Position zu der Kugelkopfkupplung beibehält und somit eine dauerhaft optimale Ausrichtung eines von der Heckträgerkupplung getragenen Heckträgers gewährleistet. Weiterhin ist es Aufgabe der Erfindung, eine optimale Ausrichtung der unteren Klemmeinrichtung an der Kugelkopfkupplung sicher zu stellen, sowie die auftretenden Belastungen möglichst optimal auf die Kugelkopfkupplung zu übertragen.

Diese Aufgabe wird ausgehend von den Merkmalen des Oberbegriffs des Anspruchs 1 bzw. 6 durch die kennzeichnenden Merkmale des Anspruchs 1 bzw. 6 gelöst. In den jeweiligen Unteransprüchen sind vorteilhafte und zweckmäßige Weiterbildungen angegeben.

Bei der erfindungsgemäßen Heckträgerkupplung umfasst die obere Klemmeinrichtung zwei Klemmbacken, wobei zwischen den Klemmbacken ein kugelförmiger Aufnahmeraum und ein den kugelförmigen Aufnahmeraum mit einer Umgebung verbindender zylinderförmiger Aufnahmeraum ausgebildet sind. Mit einer derartigen oberen Klemmeinrichtung lässt sich die Heckträgerkupplung in zwei Bereichen optimal an die Kugelkopfkupplung anbinden. Weiterhin lässt sich mit einer derartigen oberen Klemmeinrichtung die Heckträgerkupplung großflächig an den Kugelkopf anbinden, so dass Belastungsspitzen im Bereich des Kugelkopfes vermieden werden. Eine derartig ausgebildete obere Klemmeinrichtung, welche über die Flanschplatte mit der unteren Klemmeinrichtung verbunden ist, ermöglicht es auch, die unteren Klemmeinrichtung vor einer Fixierung präzise auf den Hals der Kugelkopfkupplung auszurichten, da sich die obere Klemmeinrichtung beim Festklemmen an dem Kugelkopf und dem Hals der Kugelkopfkupplung an der Kugelkopfkupplung ausrichtet und somit auch die Flanschplatte, an welcher auch die untere Klemmeinrichtung befestigt ist, in eine definierte Position bringt.

Weiterhin ist es vorgesehen, dass die Spannbacken im montierten Zustand der Heckträgerkupplung an dem Hals der Kugelkopfkupplung anliegen, dass ein Nicken der Heckträgerkupplung um eine quer zur Fahrtrichtung orientierte Querachse des Kugelkopfes, ein Wanken der Heckträgerkupplung um eine in die Fahrtrichtung verlaufende Längsachse des Kugelkopfes und ein Gieren der Heckträgerkupplung um die Mittelachse des Kugelkopfes jeweils durch die beidseitige Anlage der Spannbacken an dem zweiten Abschnitt des Halses verhindert ist. Hierdurch ist die Heckträgerkupplung unabhängig vom jeweiligen Belastungsszenario für alle Einsatzzwecke geeignet.

Es ist auch vorgesehen, dass die Kugelkopfkupplung derart ausgestaltet ist, dass der Hals einen ersten, kugelkopfnahen Abschnitt umfasst, welcher eine gemeinsame Mittelachse mit dem Kugelkopf aufweist, welche im Wesentlichen senkrecht zu einer Fahrtrichtung des Fahrzeugs ausgerichtet ist, wobei der Hals einen zweiten Abschnitt umfasst, welcher auf den ersten Abschnitt folgt und wenigstens abschnittsweise gebogen verläuft. Derartige Kugelkopfkupplungen sind zur Montage der Heckträgerkupplung geeignet.

Weiterhin ist es vorgesehen, jede Spannbacke mit wenigstens zwei Kontaktabschnitten auszubilden, wobei sich die Kontaktabschnitte der beiden Spannbacken im montierten Zustand der Spannbacken spiegelbildlich als Kontaktabschnittpaare gegenüber liegen und wobei die Kontaktabschnittpaare im montierten Zustand der Spannbacken jeweils derart durch zwei Verbindungsmittel verbunden sind, dass der Hals jeweils zwischen den beiden Verbindungsmitteln verläuft, wobei ein erstes Kontaktabschnittpaar im montierten Zustand insbesondere in einem ersten, kugelkopfnahen Abschnitt des Halses anliegt, wobei ein zweites Kontaktabschnittpaar im montierten Zustand insbesondere in einem zweiten kugelkopffernen Abschnitt des Halses anliegt, wobei die Spannbacken insbesondere als Rahmen ausgebildet sind, wobei jeder Rahmen insbesondere einen Befestigungsflügel umfasst, wobei der Befestigungsflügel insbesondere mit einem Schenkel des Rahmens verbunden ist. Hierdurch greift die untere Klemmeinrichtung im montierten Zustand in zwei Bereichen an dem Hals der Kugelkopfkupplung an, in welchen der Hals unterschiedliche Ausrichtungen aufweist, so dass von der zweiten Klemmeinrichtung auf unterschiedliche Weise Kräfte auf den Hals der Kugelkopfkupplung übertragen werden können und dadurch insgesamt eine Verbesserung der Kraftübertragung erzielt ist. Durch eine Ausbildung der Spannbacken als Rahmen ist es einfach möglich, den Verlauf der Verbindungsmittel zu überprüfen und so eine vorgeschriebene Montagestellung der Spannbacken zu überprüfen. Durch eine Ausstattung jedes Rahmens mit einem Befestigungsflügel ist eine Befestigung der Rahmen an der Flanschplatte erleichtert und bei Bedarf auch eine große Anlagefläche zwischen Rahmen und Flanschplatte realisierbar.

Es ist auch vorgesehen, jede Spannbacke mit der Flanschplatte zu verbinden, wobei jede Spannbacke insbesondere über ihren Befestigungsflügel mit der Flanschplatte verbunden ist. Hierdurch ist ein zuverlässiger Zusammenhalt der Flanschplatte mit einem durch die beiden Spannbacken und deren Befestigungsmittel gebildeten Spannkäfig sichergestellt, da dieser an seinen beiden Spannbacken mit der Flanschplatte verbunden ist.

Bei der erfindungsgemäßen Heckträgerkupplung umfasst die untere Klemmeinrichtung wenigstens zwei Spannbacken, wobei die Spannbacken im montierten Zustand der Heckträgerkupplung an dem zweiten Abschnitt des Halses der Kugelkopfkupplung derart anliegen, dass sowohl ein Nicken der Heckträgerkupplung um eine quer zur Fahrtrichtung orientierte Querachse des Kugelkopfes durch eine beidseitige Anlage der Spannbacken an dem an dem zweiten Abschnitt des Halses verhindert ist, als auch ein Wanken der Heckträgerkupplung um eine in die Fahrtrichtung verlaufende Längsachse des Kugelkopfes durch die beidseitige Anlage der Spannbacken an dem an dem zweiten Abschnitt des Halses verhindert ist und auch ein Gieren der Heckträgerkupplung um die Mittelachse des Kugelkopfes durch die beidseitige Anlage der Spannbacken an dem zweiten Abschnitt des Halses verhindert ist. Mittels der auf den zweiten Abschnitt des Halses der Kugelkopfkupplung wirkenden Spannbacken ist für die drei Belastungsfälle Nicken, Wanken und Gieren ein Verdrehen der Heckträgerkupplung auf dem Kugelkopf sicher vermieden, da das bzw. die jeweils um den Kugelkopf wirkende Drehmoment bzw. wirkenden Drehmomente über die Spannbacken an dem Hals der Kugelkopfkupplung abgestützt werden kann bzw. können. Weiterhin werden die auftretenden Belastungen zu großen Teilen auch direkt auf den Hals Anhängerkupplung übertragen, so dass eine Belastung des Kugelkopfes reduziert ist.

Es ist weiterhin vorgesehen, die Flanscheinrichtung mit einer Flanschplatte auszustatten und diese bei montierter Heckträgerkupplung in die Fahrtrichtung betrachtet hinter den beiden Klemmeinrichtungen anzuordnen. Hierdurch ist die Flanscheinrichtung für die Anbindung eines Heckträgers optimal zugänglich und liegt nicht schwerzugänglich zwischen dem Fahrzeug und dem Kugelkopf der Anhängerkupplung.

Weiterhin ist es vorgesehen, die Heckträgerkupplung mit einem Stützkeil auszustatten, welcher zwischen der Flanscheinrichtung und dem Hals der Kugelkopfkupplung angeordnet ist und an den Hals der Kugelkopfkupplung derart angeformt ist, dass der Hals zu wenigstens zwei Stützkanten des Stützkeils in linienförmigem Kontakt steht oder dass der Hals mit wenigstens einer Stützfläche des Stützkeils in flächigem Kontakt steht. Durch ein derartiges Einbauteil wird die Widerstandsfähigkeit der Heckträgerkupplung insbesondere gegen ein Nicken oder Gieren um den Kugelkopf weiter erhöht, da der Hals der Anhängerkupplung noch stärker an die Heckträgerkupplung angebunden wird. Insbesondere ist es auch vorgesehen, dass der Stützkeil vertikal verschiebbar mit der Flanschplatte verbunden ist. Hierdurch lässt sich der Stützkeil auf einfache Weise an unterschiedliche geformte Hälse von Kugelkopfkupplungen anpassen.

Hinsichtlich der Ausgestaltung der unteren Klemmeinrichtung ist es vorgesehen, die untere Klemmeinrichtung zusätzlich zu den beiden Spannbacken mit zwei mit der Flanscheinrichtung verbundene Tragarme und mit Stellmitteln auszustatten, wobei jeder Tragarm mit zwei Stellmitteln eine der Spannbacken trägt und wobei jede Spannbacke mittels der Stellmittel in ihrem Abstand zu dem jeweiligen Tragarm verstellbar ist. Hierdurch ist eine individuell einstellbare Spanneinrichtung realisiert, welche sich individuell auf unterschiedliche Bauformen von Kugelkopfkupplungen anpassen lässt.

Weiterhin ist es vorgesehen, die obere Klemmeinrichtung mit zwei Klemmbacken auszustatten, wobei zwischen den Klemmbacken ein kugelförmiger Aufnahmeraum und ein den kugelförmigen Aufnahmeraum mit einer Umgebung verbindender zylinderförmiger Aufnahmeraum ausgebildet sind. Mit einer derartigen oberen Klemmeinrichtung lässt sich die Heckträgerkupplung großflächig an den Kugelkopf anbinden, so dass Belastungsspitzen im Bereich des Kugelkopfes vermieden werden.

Es ist vorgesehen, die beiden Aufnahmeräume der oberen Klemmeinrichtung jeweils etwa zur Hälfte durch die erste und die zweite Klemmbacke auszubilden, wobei die erste Klemmbacke mit der Flanscheinrichtung fest verbunden ist und wobei die zweite Klemmbacke durch in der Flanscheinrichtung und in der ersten Klemmbacke gelagerte Spannschrauben mit der ersten Klemmbacke verbunden ist. Durch eine derartige Anordnung der Spannschrauben sind diese für einen Anwender zum Einspannen des Kugelkopfes von einer Rückseite der Flanscheinrichtung bequem zugänglich.

Hinsichtlich der unteren Klemmeinrichtung ist es vorgesehen, dass jede Spannbacke mit wenigstens zwei Anlagepunkten an dem Hals der Kugelkopfkupplung anliegt, wobei der erste Anlagepunkt jeweils oberhalb einer in Draufsicht betrachteten maximalen Breite des Halses der Kugelkopfkupplung liegt, wobei der zweite Anlagepunkt jeweils unterhalb einer in Draufsicht betrachteten maximalen Breite des Halses der Kugelkopfkupplung liegt und wobei jeder Anlagepunkt beabstandet zu der Mittelachse des Kugelkopfes liegt. Hierdurch kann die oben erwähnte Abstützung der Heckträgerkupplung gegenüber um den Kugelkopf in Folge fahrdynamischer oder statischer Belastungen wirkenden Drehmomenten dadurch optimal erfolgen, dass bei den einzelnen Belastungen jeweils zwei Anlagepunkte nicht nur einen Reibschluss zu dem Hals aufweisen, sondern um ausweichen zu können auch ihre Position verändern müssten und somit hohe Kräfte kompensieren können.

Weiterhin ist es vorgesehen, zu dem Hals der Kugelkopfkupplung weisende Stirnflächen der Spannbacken in wenigstens einem Abschnitt durch eine ebene, schräg stehende Fläche oder eine gewölbte Fläche zu bilden, wobei diese Fläche einem zu kontaktierenden Oberflächenverlauf des Halses der Kugelkopfkupplung angenähert oder angepasst ist. Hierdurch wird eine zuverlässige Positionierung der Spannbacken an dem Hals der Anhängerkupplung erreicht und es wird die Gefahr vermieden, dass die Spannbacken mit ihren Stirnflächen beim Spannen abrutschen.

Es ist auch vorgesehen, zwischen den Stellmitteln und den Spannbacken jeweils Gelenke vorzusehen, so dass die Spannbacken gegenüber den durch die jeweils zwei Stellmittel definierten Verfahrachsen verkippbar sind. Hierdurch wird die Zahl der Halsgeometrien, auf welche die untere Klemmeinrichtung anpassbar ist, erhöht, da die Spannbacken auf die Geometrie des Halses der jeweiligen Kugelkopfkupplung optimal angepasst werden können.

Schließlich ist es vorgesehen, die Heckträgerkupplung zusätzlich zu der Flanscheinrichtung mit einer Gegenflanscheinrichtung auszustatten, welche mit der Flanscheinrichtung insbesondere durch eine lineare Aufschiebebewegung formschlüssig kuppelbar ist und wobei die Gegenflanscheinrichtung mit einem Heckträger, welcher eine Trageinrichtung bildet, verbindbar ist. Eine derartige Ausführung der Heckträgerkupplung erhöht den Nutzwert der Heckträgerkupplung weiter. So können z.B. Heckträger, welche bereits mit einer passenden Gegenflanscheinrichtung ausgestattet sind, schnell und unkompliziert mit der Flanscheinrichtung verbunden werden. Dies bedeutet, dass z.B. mit minimalem Arbeitsaufwand ein Fahrradträger gegen einen Gepäckträger ausgetauscht werden kann.

Weitere Einzelheiten der Erfindung werden in der Zeichnung anhand von schematisch dargestellten Ausführungsbeispielen beschreiben.

Hierbei zeigt:
- Figur 1:: eine fahrzeugseitige Komponente der Heckträgerkupplung in Seitenansicht;
- Figur 2:: die fahrzeugseitige Komponente der Heckträgerkupplung der Figur 1 in einer Ansicht von rechts;
- Figur 3:: eine trägerseitige Komponente der Heckträgerkupplung in perspektivischer Ansicht;
- Figur 4:: die aus den Figuren 1 und 2 bekannte fahrzeugseitige Komponente der Heckträgerkupplung in einem an eine Kugelkopfkupplung eines Fahrzeugs montierten Zustand;
- Figur 5:: eine perspektivische Unteransicht der aus den vorhergehenden Figuren bekannten Heckträgerkupplung in einer Kupplungsstellung;
- Figur 6:: eine orthogonale Unteransicht auf die in der Figur 5 gezeigte Heckträgerkupplung, wobei diese an einer zweiten Ausführungsvariante einer Kugelkopfkupplung montiert ist;
- Figur 7:: eine schematische Darstellung einer zweiten Ausführungsvariante einer fahrzeugseitigen Komponente einer Heckträgerkupplung, wobei diese an einer dritten Ausführungsvariante einer Kugelkopfkupplung montiert ist;
- Figur 8:: eine perspektivische Ansicht der rechten Klemmbacke der in der Figur 7 gezeigten Heckträgerkupplung;
- Figur 9:: einen Schnittansicht durch die Darstellung der Figur 7 entsprechend der Schnittlinie IX-IX;
- Figur 10:: eine schematische Darstellung der aus der Figur 7 bekannten zweiten Ausführungsvariante einer fahrzeugseitigen Komponente einer Heckträgerkupplung, wobei diese an einer vierten Ausführungsvariante einer Kugelkopfkupplung montiert ist;
- Figur 11:: eine schematische Darstellung einer dritten Ausführungsvariante einer fahrzeugseitigen Komponente einer Heckträgerkupplung, wobei diese zur Montage an einer fünften Ausführungsvariante einer Kugelkopfkupplung vorgesehen ist;
- Figur 12:: die Darstellung der Figur 11 unter Weglassung der fünften Kugelkopfkupplung;
- Figur 13:: die dritte Ausführungsvariante der fahrzeugseitigen Komponente der Heckträgerkupplung, wobei diese an der fünften Kugelkopfkupplung montiert ist;
- Figur 14:: die Darstellung der Figur 13 unter Weglassung der fünften Kugelkopfkupplung;
- Figur 15, 16:: die dritte Ausführungsvariante der fahrzeugseitigen Komponente der Heckträgerkupplung, wobei diese an einer sechsten Kugelkopfkupplung montiert ist;
- Figur 17 bis 24:: eine vierte Ausführungsvariante einer fahrzeugseitigen Komponente einer Heckträgerkupplung, wobei diese zur Montage an einer siebten Kugelkopfkupplung vorgesehen ist;
- Figur 25, 26:: eine fünfte Ausführungsvariante einer fahrzeugseitigen Komponente einer Heckträgerkupplung, wobei diese an einer achten Ausführungsvariante einer Kugelkopfkupplung montiert ist;
- Figur 27:: eine weitere Darstellung der in den Figuren 25 und 26 gezeigten fünften Ausführungsvariante der fahrzeugseitigen Komponente der Heckträgerkupplung, wobei diese an einer neunten Ausführungsvariante einer Kugelkopfkupplung montiert ist,
- Figur 28:: eine schematische Darstellung zu den Figuren 25 und 26 mit einer zehnten Variante einer Kugelkopfkupplung;
- Figur 29:: eine schematische Darstellung zu den Figuren 25 und 26 mit der neunten Variante der Kugelkopfkupplung;
- Figur 30:: eine schematische Darstellung zu den Figuren 25 und 26 mit der zehnten Variante der Kugelkopfkupplung und
- Figur 31:: eine schematische Darstellung zu den Figuren 25 und 26 mit einer elften Variante der Kugelkopfkupplung.

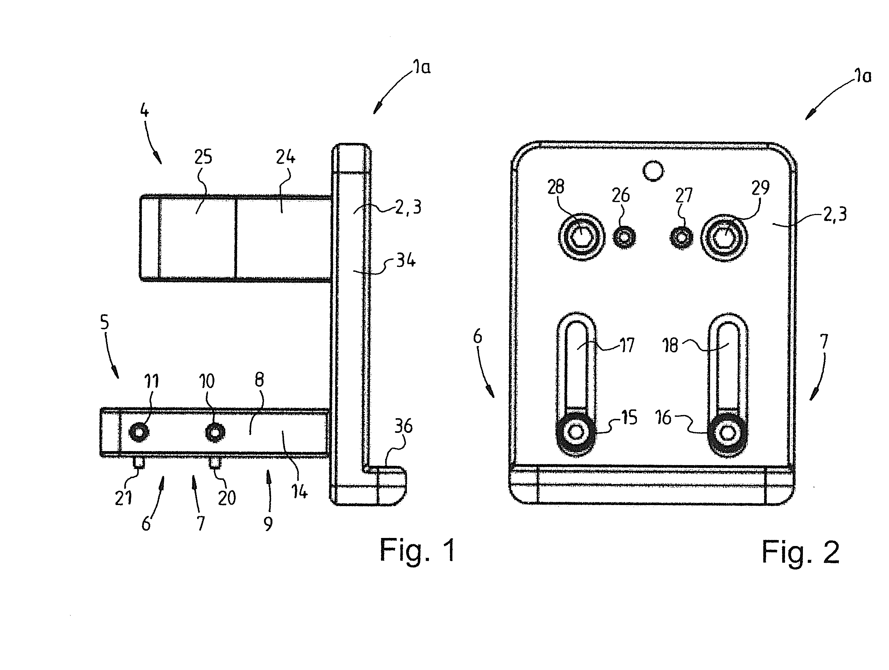

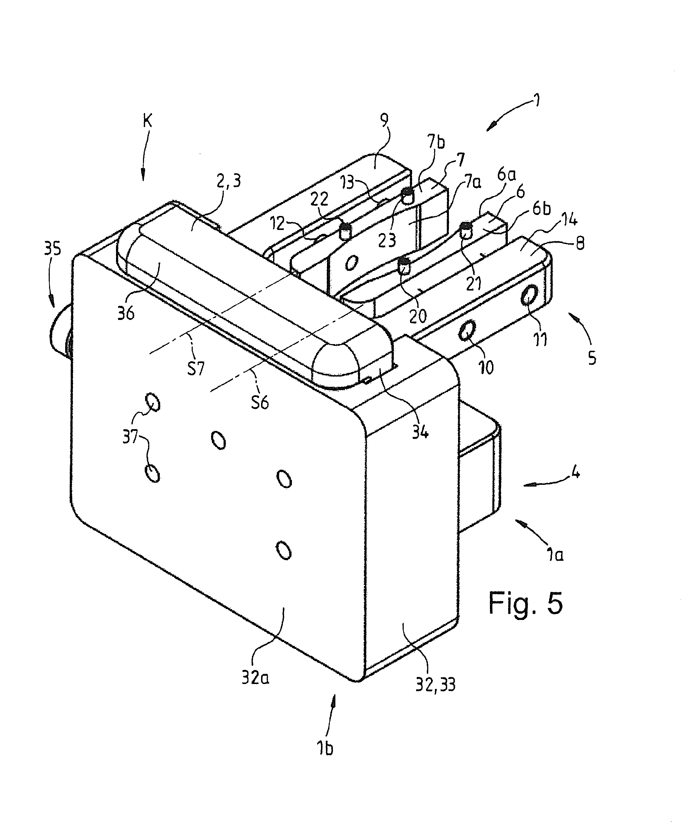

In der Figur 1 ist eine fahrzeugseitige Komponente 1a einer Heckträgerkupplung 1 (siehe Figur 5) in Seitenansicht gezeigt. Die Komponente 1a umfasst eine Flanscheinrichtung 2, welche als Flanschplatte 3 ausgebildet ist, eine obere Klemmeinrichtung 4 und eine untere Klemmeinrichtung 5.

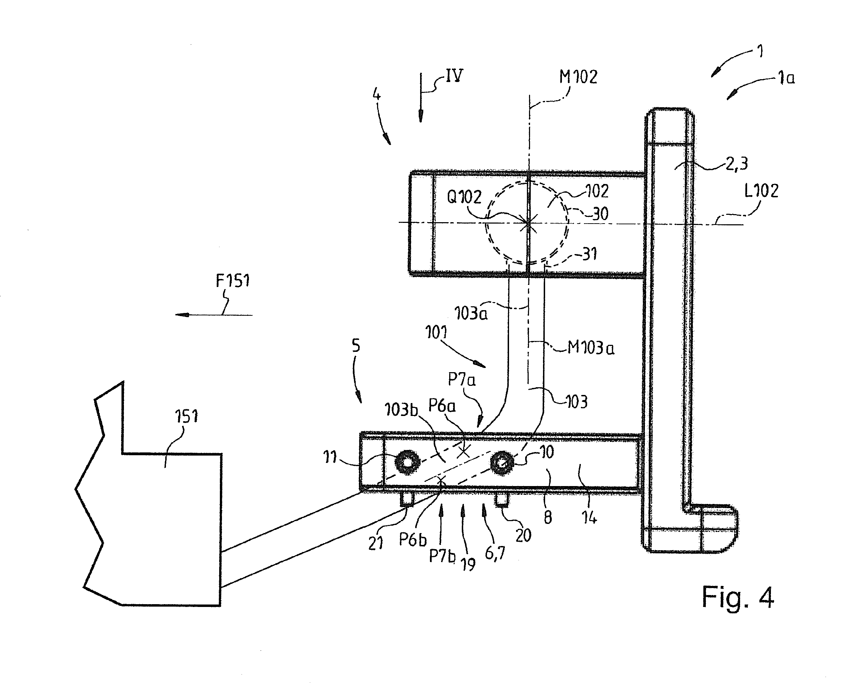

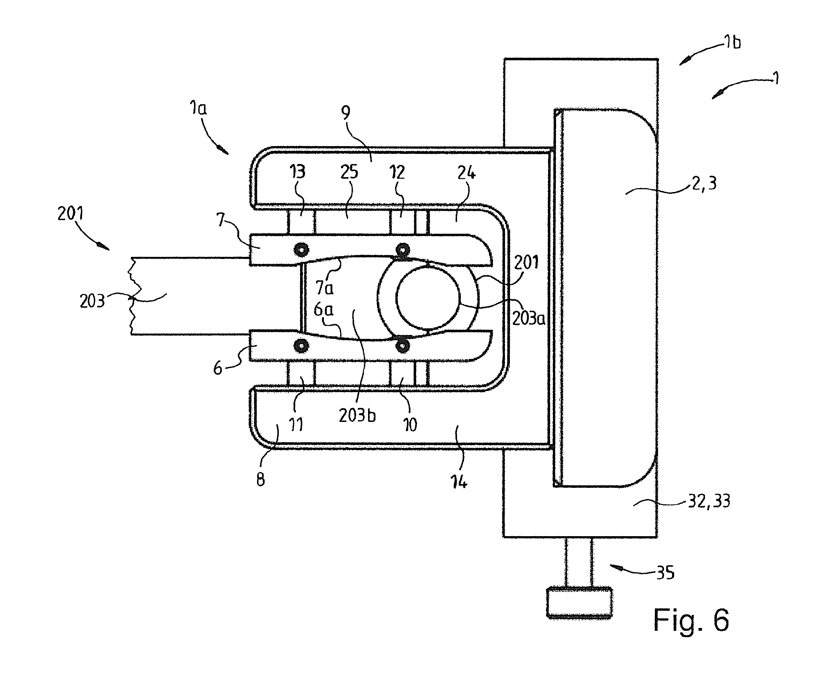

In der Figur 2 ist die in der Figur 1 gezeigte fahrzeugseitige Komponente 1a in einer Ansicht von rechts dargestellt. Die beiden Klemmeinrichtungen 4 und 5 sind durch die Flanscheinrichtung 2 starr verbunden. Hierbei umfasst die untere Klemmeinrichtung 5 zwei Spannbacken 6, 7, zwei Tragarme 8, 9 und vier Stellmittel 10, 11 und 12, 13 (siehe auch Figuren 5 und 6). Die beiden Tragarme 8, 9 sind durch ein in Draufsicht U-förmiges Bauteil 14 gebildet, welches mit der Flanschplatte 3 über Schrauben 15, 16 verbunden ist. Hierbei sind die Schrauben 15, 16 in der Flanschplatte 3 in Langlöchern 17, 18 geführt, so dass das Bauteil 14 und damit die Tragarme 8, 9 gegenüber der Flanschplatte 3 höhenverstellbar sind. Jeder Tragarm 8, 9 trägt mittels zwei der Schrauben 10, 11 bzw. 12, 13 eine der Spannbacken 6, 7, wobei sich die Spannbacken 6, 7 mit Stirnflächen 6a, 7a unter Freilassung eines Spannraums 19 gegenüber liegen (siehe Figuren 5 und 6). An Unterseiten 6b, 7b der Spannbacken 6, 7 sind weiterhin je zwei Sicherungsschrauben 20, 21 und 22, 23 erkennbar, mit welchen die als Stellschrauben ausgeführten Stellmittel 10, 11 und 12, 13 an den Spannbacken 6, 7 so fixiert sind, dass die Spannbacken 6, 7 um eine Schwenkachse S6 bzw. S7 verkippbar sind. Die oberen Klemmeinrichtung 4 (siehe insbesondere Figur 1) umfasst eine erste Klemmbacke 24 und eine zweite Klemmbacke 25. Hierbei ist die erste Klemmbacke 24 mittels Schrauben 26, 27 an der Flanschplatte 3 fixiert und die zweite Klemmbacke 25 lässt sich mittels Spannschrauben 28, 29 an die erste Klemmbacke 24 heranziehen (siehe Figur 2), um einen in der Figur 4 gezeigten Kugelkopf 102 eine Kugelkopfkupplung 101 zwischen den Klemmbacken 24, 25 einzuspannen. Hierzu sind die Spannschrauben 28, 29 mit ihren Köpfen an der Flanschplatte 3 gelagert und laufen durch in der Flanschplatte 3 und in der ersten Klemmbacke 24 ausgeführte Durchgangsbohrungen bis in in der zweiten Klemmbacke 25 ausgeführte Gewindebohrungen. Zwischen den beiden Klemmbacken 24, 25 der oberen Klemmeinrichtung 4 ist ein kugelförmiger Aufnahmeraum 30 ausgeführt, welcher sich über einen zylinderförmigen Aufnahmeraum 31 in Richtung der unteren Klemmeinrichtung 5 öffnet (siehe Figur 4). Hierbei sind die Aufnahmeräume 30, 31 so auf den Kugelkopf 102 und einen Hals 103 der Kugelkopfkupplung 101 abgestimmt, dass diese in den Aufnahmeräumen 30, 31 bei gespannten Klemmbacken 24, 25 klemmend aufgenommen sind. Wie aus der Darstellung der Figur 4 hervorgeht durchläuft der Hals 103 mit einem zweiten Abschnitt 103b den Spannraum 19 der unteren Klemmeinrichtung 5. Der zweite Abschnitt 103b des Halses 103 geht über einen ersten Abschnitt 103a, welcher teilweise von der oberen Klemmeinrichtung 5 geklemmt wird, in den Kugelkopf 102 über. Hierbei ist der erste Abschnitt 103a so definiert, dass eine Mittelachse M102 des Kugelkopfes 102 auch eine Mittelachse M103a des ersten Abschnitts 103a bildet.

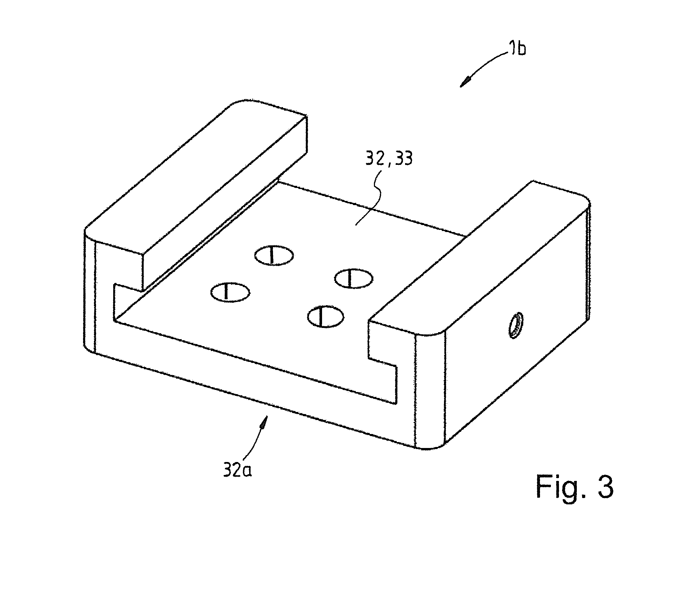

In der Figur 3 ist in perspektivischer Ansicht eine trägerseitige Komponente 1b der Heckträgerkupplung 1 gezeigt, welche als Gegenflanscheinrichtung 32 ausgeführt ist und einen Gleiter 33 bildet, welcher - wie in der Figur 5 gezeigt - auf die Flanschplatte 3 aufschiebbar ist, welche eine Schiene 34 für den Gleiter 33 bildet. Über eine Sicherungseinrichtung 35, welche in der Figur 3 nicht dargestellt ist, ist die trägerseitige Komponente 1b in einer in der Figur 5 gezeigten Kupplungsstellung K gegen ein Abziehen von der Schiene 34 gesichert, wobei die Kupplungsstellung K dann erreicht ist, wenn der Gleiter 33 an einem an der Flanschplatte 3 ausgebildeten Anschlag 36 anliegt. Die Gegenflanscheinrichtung 32 weist an einer von der Schiene 34 abgewandten Seite 32a zahlreiche Gewindebohrungen 37 auf, an welchen ein nicht dargestellter Heckträger befestigbar ist. Hierbei sind in den Figuren 3 und 5 unterschiedliche Anordnungen der Gewindebohrungen 37 gezeigt.

In der Figur 4 ist weiterhin ein Heckbereich eines Fahrzeugs 151 schematisch dargestellt, an welchem die Kugelkopfkupplung 101 befestigt ist. Weiterhin ist hier in dem Spannbereich 19 mit einer strichpunktierten Linie L103 der Verlauf einer maximalen Breite des Halses 103 angedeutet, sofern der Hals 103 in Draufsicht in eine Pfeilrichtung IV betrachtet wird. Jede der beiden Spannbacken 6, 7 liegt mit einem ersten Anlagepunkt P6a bzw. P7a und einem zweiten Anlagepunkt P6b bzw. P7b von oben betrachtet in einem Kontaktbereich der linken Spannbacke 6 und in einem Kontaktbereich der rechten Spannbacke 7 einmal oberhalb der maximalen Breite des Halses 103 und einmal unterhalb der maximalen Breite des Halses 103 an dem Hals 103 bzw. genauer gesagt an dem zweiten Abschnitt 103b des Halses 103 an.
- Hierdurch blockieren die Anlagepunkte P6a und P6b ein von oben betrachtetes nach rechts Gieren der Heckträgerkupplung 1 um die Mittelachse M102, da sich diese stärker an den Hals 103 anlegen.
- Hierdurch blockieren die Anlagepunkte P7a und P7b ein von oben betrachtetes nach links Gieren der Heckträgerkupplung 1 um die Mittelachse M102, da sich diese stärker an den Hals 103 anlegen.
- Hierdurch blockieren die Anlagepunkte P6b und P7a ein in eine Fahrtrichtung F151 betrachtetes nach rechts Wanken der Heckträgerkupplung 1 um eine Längsachse L102 des Kugelkopfes 102, da diese aus ihrer Position zurückweichen müssten, um sich der Linie 103 zu nähern.
- Hierdurch blockieren die Anlagepunkte P6a und P7b ein in die Fahrtrichtung F151 betrachtetes nach links Wanken der Heckträgerkupplung 1 um die Längsachse L102 des Kugelkopfes 102, da diese aus ihrer Position zurückweichen müssten, um sich der Linie 103 zu nähern.
- Hierdurch blockieren die Anlagepunkte P6a und P7a ein in die Fahrtrichtung F151 betrachtetes nach vorne Nicken der Heckträgerkupplung 1 um eine in die Zeichnungsebene hinein verlaufende Querachse Q102 des Kugelkopfes 102, da diese aus ihrer Position zurückweichen müssten, um sich der Linie 103 zu nähern.
- Hierdurch blockieren die Anlagepunkte P6b und P7b ein in die Fahrtrichtung F151 betrachtetes nach hinten Nicken der Heckträgerkupplung 1 um die in die Zeichnungsebene hinein verlaufende Querachse Q102 des Kugelkopfes 102, da diese aus ihrer Position zurückweichen müssten, um sich der Linie 103 zu nähern.

Selbstverständlich ist die oben beschriebene Betrachtung anhand der Anlagepunkte als idealisierte Betrachtung der Funktionsweise der erfindungsgemäßen Heckträgerkupplung zu verstehen. Die einzelnen Anlagepunkte sind alternativ jeweils auch durch eine oder mehrere Anlageflächen oder durch mehrere Anlagestellen oder Anlagelinien gebildet. Hierbei bringen großflächige Anlageflächen den Vorteil mit sich, dass punktuelle Belastungen des Halses der Kugelkopfkupplung vermieden werden.

In der Figur 6 ist eine orthogonale Unteransicht auf die in der Figur 5 gezeigte Heckträgerkupplung 1 gezeigt, wobei diese an einer zweiten Kugelkopfkupplung 201 montiert ist, welche in ihren Dimensionen von der in der Figur 4 gezeigten Kugelkopfkupplung abweicht. Bezüglich der Einzelteile der Heckträgerkupplung 1 wird auf die Beschreibung zu den Figuren 1 bis 5 verwiesen. Aus der Darstellung ist erkennbar, wie die Spannbacken 6, 7 einen Hals 203 bzw. einen zweiten Halsabschnitt 203b umgreifen. Abweichend von den üblichen Regeln einer technischen Zeichnung ist in der Figur 6 eine Kontur eines unter der Zeichnungsebene liegenden ersten Halsabschnitts 203a und eine Kontur eines noch weiter unter der Zeichnungsebene zwischen den Klemmbacken 24, 25 liegenden Kugelkopfes 202 in einem zwischen den Spannbacken 6, 7 liegenden Bereich mit durchgezogenen Linien zur weiteren Erläuterung des Verlaufs der Kugelkopfkupplung 201 gezeigt.

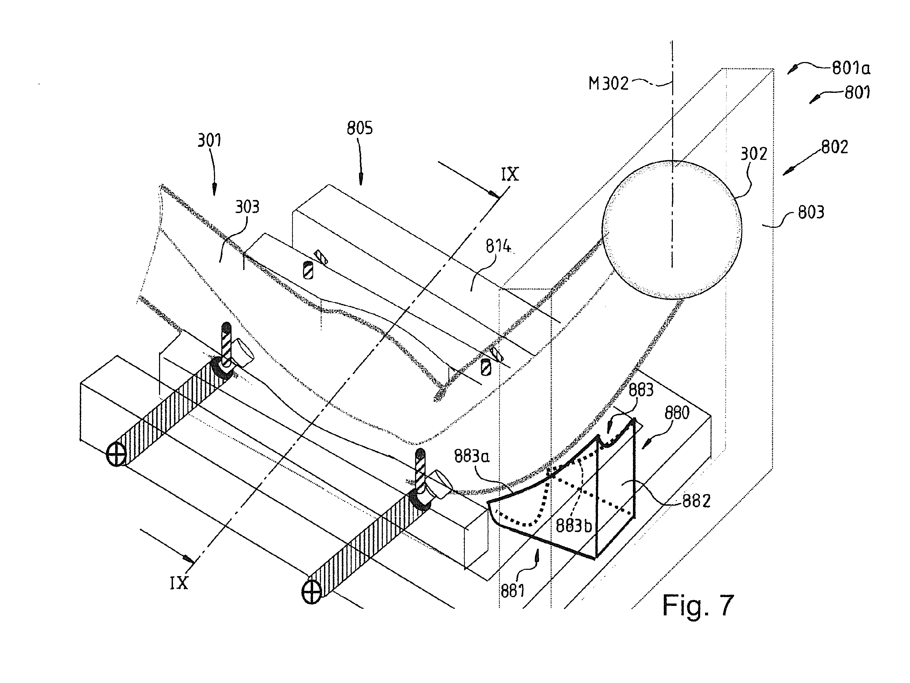

Die Figur 7 zeigt eine schematische Darstellung einer zweiten Ausführungsvariante einer fahrzeugseitigen Komponente 801a einer Heckträgerkupplung 801, wobei diese an einer dritten Kugelkopfkupplung 301 montiert ist. Zur Vereinfachung sind von der fahrzeugseitigen Komponente 801a nur eine untere Klemmeinrichtung 805 und eine Flanscheinrichtung 802 gezeigt. Ein Kugelkopf 302 der Kugelkopfkupplung 301 liegt abweichend von dem optischen Eindruck oberhalb der Klemmeinrichtung 805 und auf der Seite der Klemmeinrichtung 805 vor einer die Flanscheinrichtung 802 bildenden Flanschplatte 803. Grundsätzlich ist die Heckträgerkupplung 801 vergleichbar zu der in den Figuren 1 bis 6 gezeigten Heckträgerkupplung aufgebaut. Abweichend hiervon umfasst die Heckträgerkupplung 801 einen Stützkeil 880, welcher in der Figur 7 durch die Flanschplatte 803 hindurch erkennbar ist und welcher zwischen der unteren Klemmeinrichtung 805 und der Flanschplatte 803 angeordnet ist. Der Stützkeil 880 umfasst eine untere Anlagefläche 881, mit welcher dieser auf einem U-förmigen Bauteil 814 der Klemmeinrichtung 805 aufliegt und eine hintere Anlagefläche 882, mit welcher dieser an der Flanschplatte 803 anliegt. Die beiden Anlageflächen 881 und 882 sind durch eine rinnenförmig gewölbte Stützfläche 883 verbunden, welche derart ausgeführt ist, dass ein Hals 303 der Kugelkopfkupplung 301 an Stützkanten 883a und 883b der Stützfläche 883 anliegt. Alternativ ist es auch vorgesehen, dass der Stützkeil 880 soweit an den Hals 303 der Kugelkopfkupplung angepasst ist, dass eine flächige Anlage zwischen beiden Bauteilen besteht, wenn die fahrzeugseitige Komponente 801a der Heckträgerkupplung 801 an der Kugelkopfkupplung 301 montiert ist. Durch den Stützkeil 880 liegt der Hals 303 der Kugelkopfkupplung 301 in einem weiteren Bereich an der Heckträgerkupplung 801 an, so dass insbesondere ein Gieren der Heckträgerkupplung 801 um eine Mittelachse M302 des Kugelkopfes 302 noch wirksamer als bei der in den Figuren 1 bis 6 gezeigten ersten Ausführungsvariante der Heckträgerkupplung behindert ist.

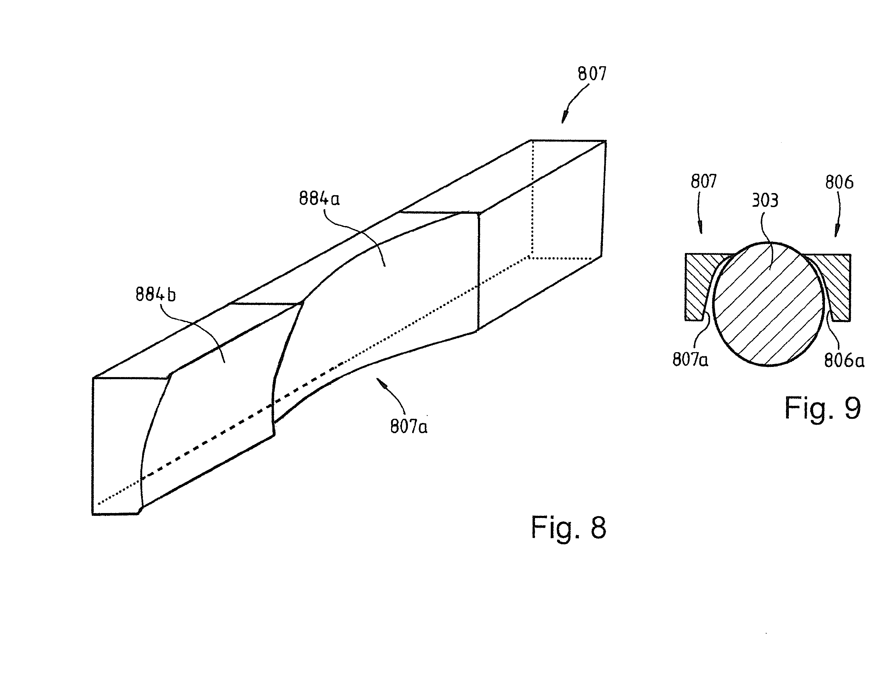

In der Figur 8 ist eine rechte Spannbacke 807 der in der Figur 7 gezeigten Heckträgerkupplung 801 in perspektivischer Ansicht dargestellt. Eine Stirnfläche 807a der Spannbacke 807 umfasst zur Anpassung an Kugelkopfkupplungen eine gewölbte Fläche 884a und einen ebene, schräg stehende Fläche 884b.

In der Figur 9 ist schematisch ein Schnitt entsprechend der in der Figur 7 gezeigten Schnittlinie IX-IX gezeigt, in welchem erkennbar ist, wie sich die Spannbacke 807 und eine weitere Spannbacke 806 im Bereich ihrer gewölbten Stirnfläche 807a, 806a an den Hals 303 anlegen.

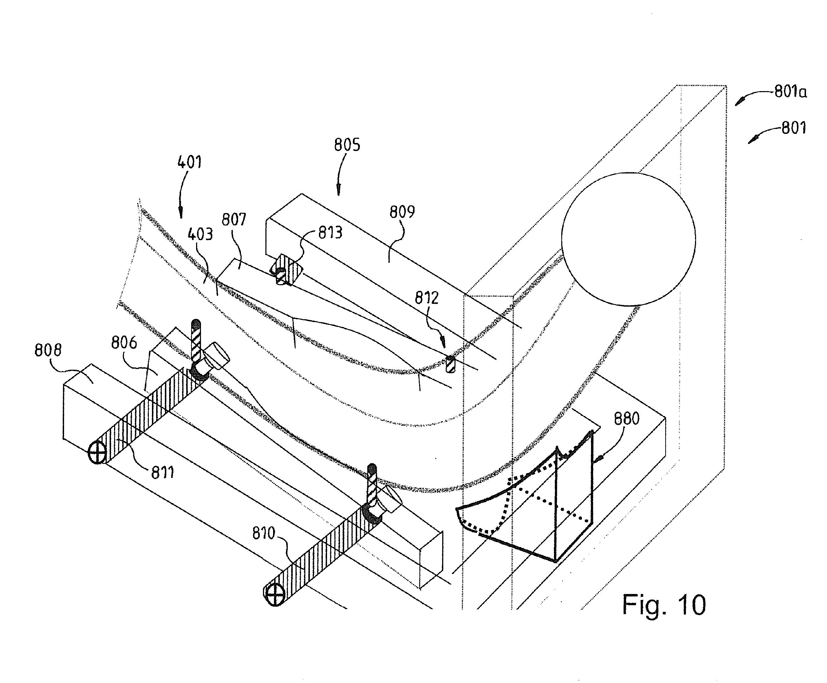

In der Figur 10 ist die aus der Figur 7 bekannte fahrzeugseitige Komponente 801a der Heckträgerkupplung 801 nochmals dargestellt, wobei von dieser eine vierte Ausführungsvariante einer Kugelkopfkupplung 401 geklemmt ist. Ein Hals 403 der Kugelkopfkupplung 401 ist im Bereich der unteren Klemmeinrichtung 805 schmaler ausgeführt als der Hals der in der Figur 7 gezeigten Kugelkopfkupplung. Entsprechend sind die Spannbacken 806 und 807 mittels Stellmitteln 810 - 813 gegenüber Tragarmen 808, 809 schräg gestellt. Durch die Möglichkeit einer Schrägstellung der Spannbacken 806, 807 ist die Heckträgerkupplung 801 zur Montage an unterschiedlich ausgeführten Kugelkopfkupplungen geeignet. Eine besondere Anpassung an spezielle Bauformen von Kugelkopfkupplungen wird ggf. mittel unterschiedlicher Stützkeile 880 vorgenommen.

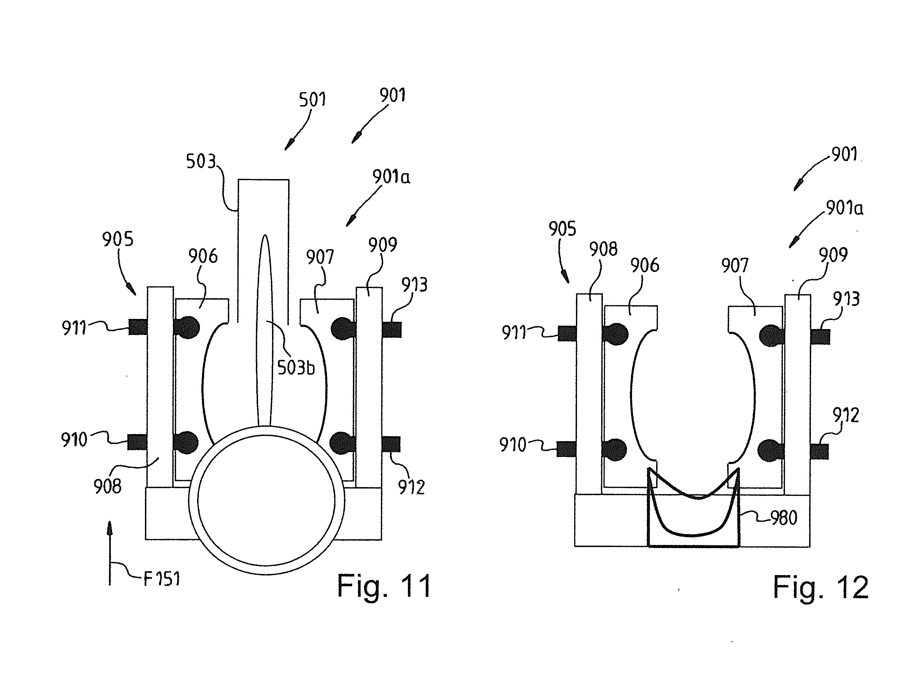

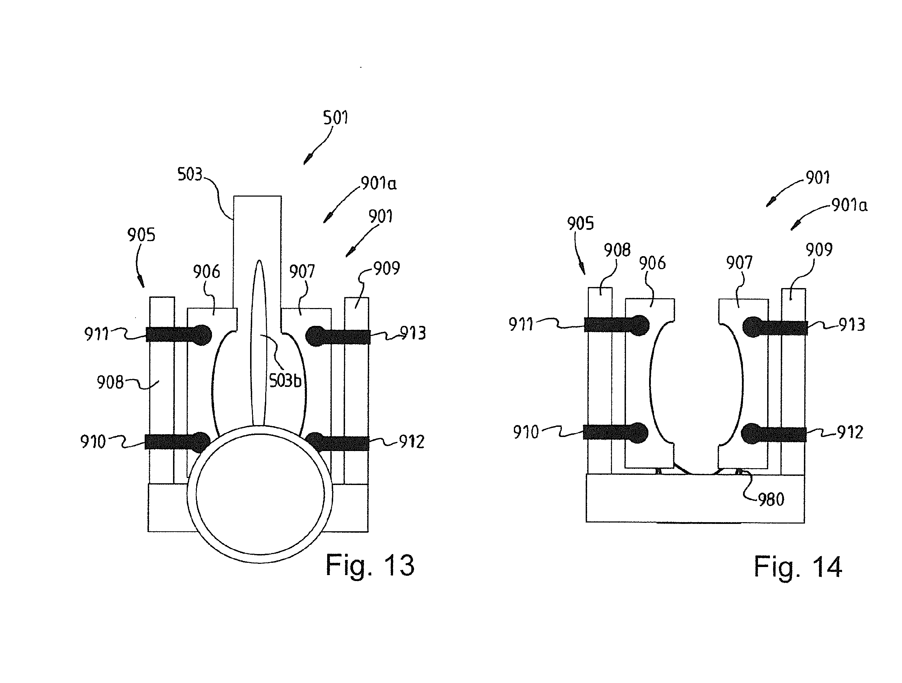

In den Figuren 11 bis 14 ist anhand einer dritten Ausführungsvariante einer fahrzeugseitigen Komponente 901a einer Heckträgerkupplung 901 schematisch dargestellt wie deren untere Klemmeinrichtung 905 einen Hals 503 einer fünften Kugelkopfkupplung 501 klemmt, indem Spannbacken 906, 907 mit Hilfe von Stellmitteln 910 bis 913 von Tragarmen 908, 909 aus an einen zweiten Abschnitt 503b des Halses 503 angepresst werden. In den Darstellungen der Figuren 11 bis 14 ist eine obere Klemmeinrichtung ausgeblendet, um den Blick auf die untere Klemmeinrichtung 905 frei zu geben. Die Figuren 11 und 12 zeigen die Spannbacken 906 und 907 in geöffneter Stellung, in welcher die Heckträgerkupplung 901 in Fahrtrichtung F151 auf den Hals 503 der Kugelkopfkupplung 501 in die gezeigte Stellung aufschiebbar und entgegen der Fahrtrichtung wieder abziehbar ist. Zur Erläuterung ist in der Figur 12 schematisch auch ein Stützkeil 980 angedeutet, an welchem der Hals 503 der Kugelkopfkupplung 501 im fest montierten Zustand der Heckträgerkupplung 901 anliegt. Der Zustand, in welchem die Kugelkopfkupplung 501 geklemmt ist, ist in den Figuren 13 und 14 gezeigt. Hierbei zeigt die Figur 14 die Heckträgerkupplung 901 ohne Kugelkopfkupplung 501 und von unten. In der Figur 14 ist der Stützkeil 980 wieder schematisch angedeutet.

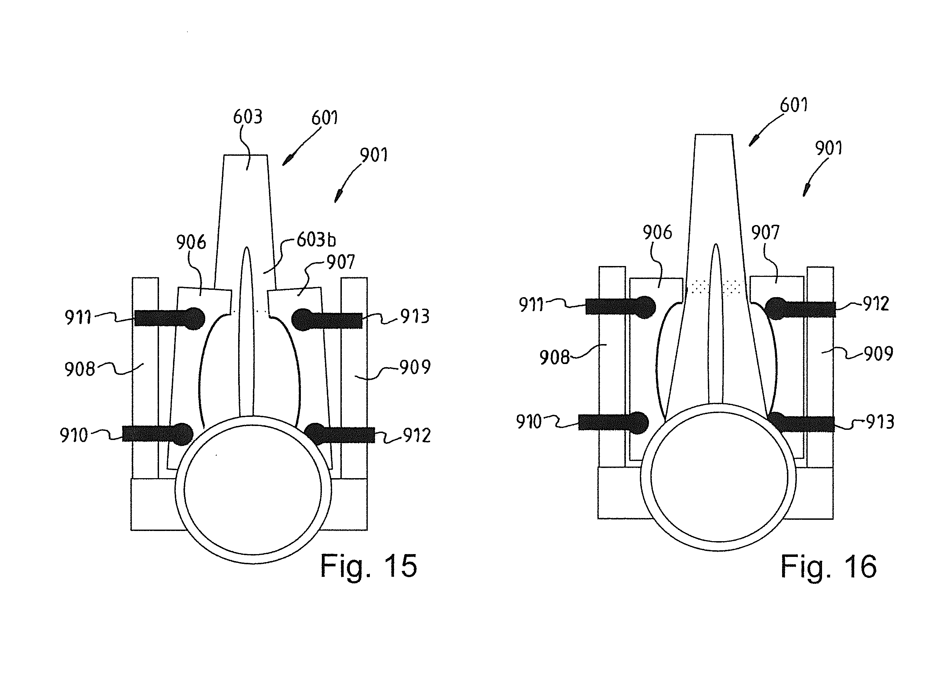

Analog zu den Darstellungen der Figuren 13 und 11 ist in den Figuren 15 und 16 eine sechste Ausführungsvariante einer Kugelkopfkupplung 601 dargestellt, welche von der aus den Figuren 11 bis 14 bekannten Heckträgerkupplung 901 geklemmt wird. Hierbei ist in der Figur 15 schematisch dargestellt wie sich die Klemmbacken 906, 907 an einen konisch verlaufenden zweiten Halsabschnitt 603b eines Halses 603 der Kugelkopfkupplung 601 anlegen, wenn die Heckträgerkupplung 901 an den Hals 603 gespannt ist. In der Figur 16 ist dann schematisch dargestellt wie die Klemmbacken 906, 907 ausgerichtet sind, wenn die Heckträgerkupplung 901 frei gegeben ist. Hierbei sind die Stellmittel 910 bis 913, welche die Tragarme 908, 909 mit den Klemmbacken 906, 907 verbinden, in den Klemmbacken 906, 907 derart pendelnd gelagert, dass sich die Klemmbacken 906, 907 zu den Tragarmen 908, 909 schräg stellen und den konischen verlaufenden zweiten Halsabschnitt 603b in ihrer Klemmstellung jeweils an wenigstens zwei Punkten einklemmen.

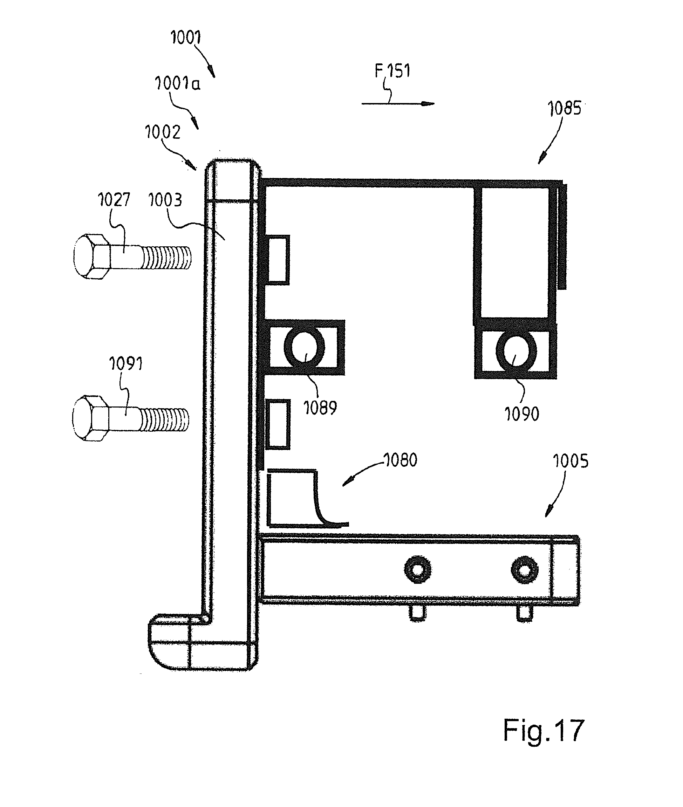

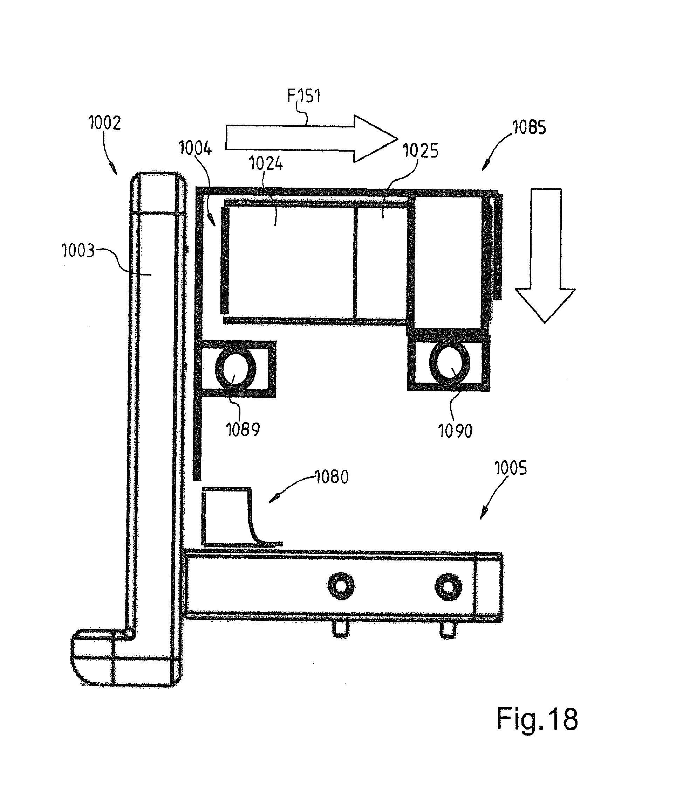

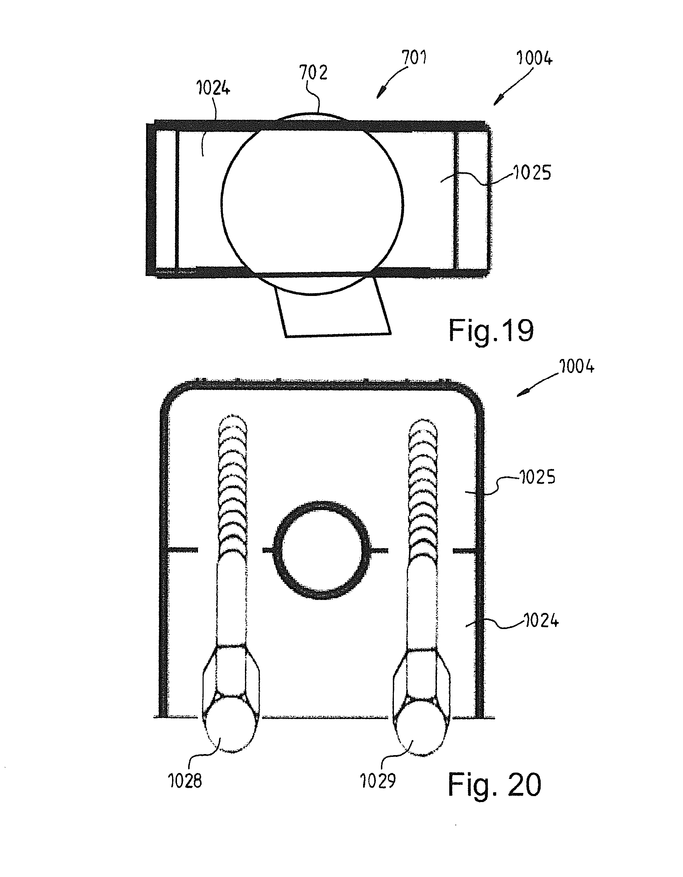

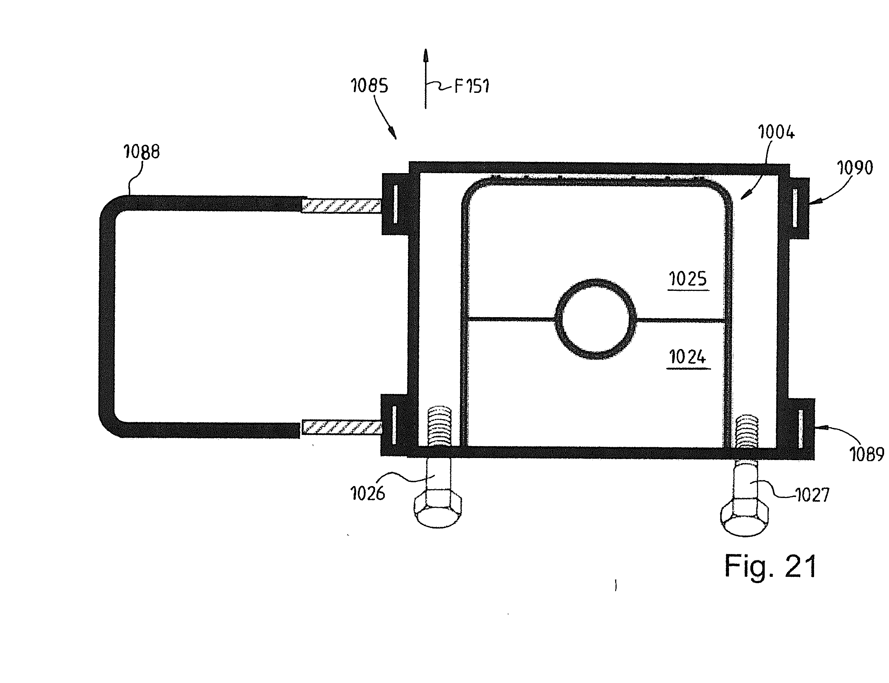

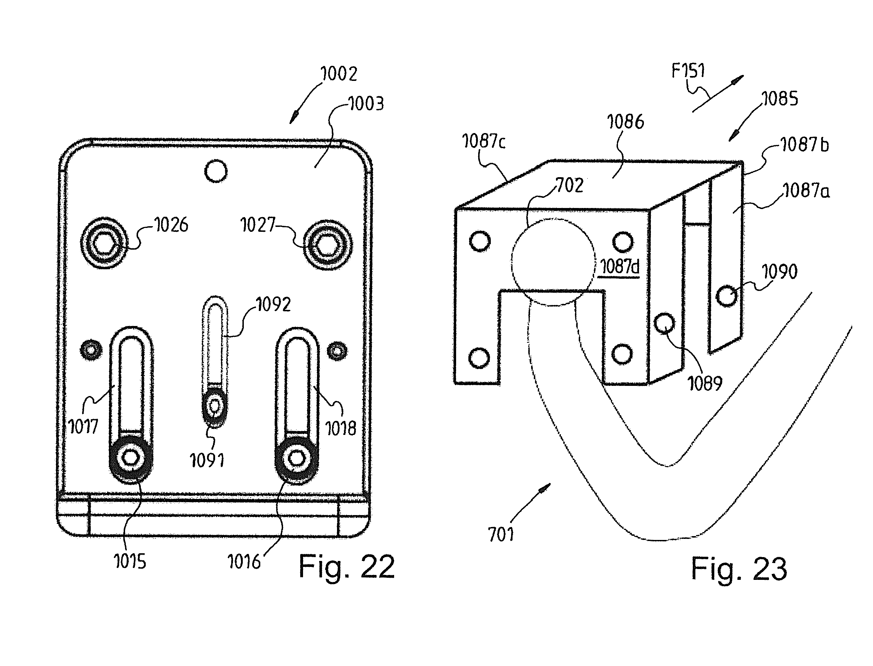

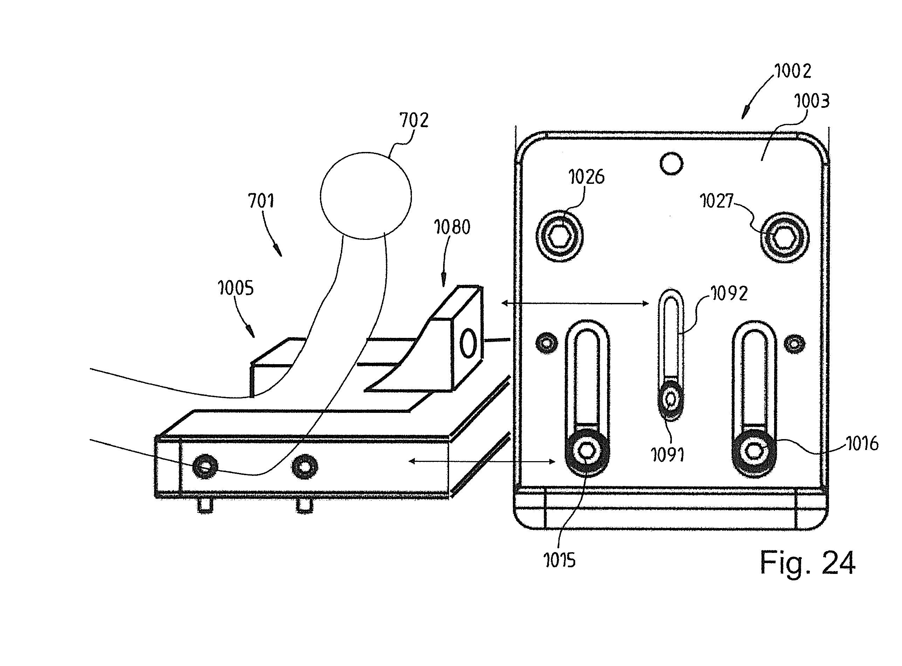

In den Figuren 17 bis 24 ist eine vierte Ausführungsvariante einer fahrzeugseitigen Komponente 1001a einer Heckträgerkupplung 1001 schematisch dargestellt, wobei diese zur Montage an einer siebten Ausführungsvariante einer Kugelkopfkupplung 701 vorgesehen ist. Wie die in den Figuren 1 bis 6 dargestellte erste Ausführungsvariante umfasst auch die vierte Ausführungsvariante eine obere Klemmeinrichtung 1004 mit einer ersten und zweiten Klemmback 1024 und 1025 (siehe insbesondere Figur 19). Im Unterschied zu der ersten Ausführungsvariante ist die obere Klemmeinrichtung 1004 aber nicht direkt mit einer Flanschplatte 1003 der Flanscheinrichtung 1002 verschraubt, sondern indirekt durch einer Überwurfeinrichtung 1085 mit der Flanschplatte 1003 verbunden. Die Überwurfeinrichtung 1085 ist mit Schrauben 1026, 1027 direkt fest mit der Flanschplatte 1003 verbunden und wird nachdem die beiden Klemmbacken 1024, 1025 mittels Spannschrauben 1028, 1029 an einem Kugelkopf 702 der Kugelkopfkupplung 701 fixiert sind, wie ein Dach auf die obere Klemmeinrichtung 1004 aufgesetzt (siehe Figur 18), so dass diese von der Überwurfeinrichtung 1085 umgriffen ist. Die Überwurfeinrichtung 1085 umfasst hierzu - wie aus der Figur 23 ersichtlich ist - einen Deckel 1086 und Seitenwände 1087a bis 1087d. Um die Überwurfeinrichtung 1085 nach dem Aufsetzen auf die obere Klemmeinrichtung 1004 an dieser gegen ein Abheben zu sichern, umfasst diese noch eine U-förmig gebogene Bügelschraube 1088, welche unterhalb der oberen Klemmeinrichtung 1004 durch quer zu eine Fahrtrichtung F151 in der Überwurfeinrichtung 1085 verlaufende Bohrungen 1089, 1090 geführt und im eingesteckten Zustand an dieser durch nicht dargestellte Muttern und/oder wenigstens ein Schloss gesichert ist. Vergleichbar zu der in der Figur 1 dargestellten ersten Ausführungsvariante umfasst die Heckträgerkupplung 1001 auch eine untere Klemmeinrichtung 1005, welche mittels Schrauben 1015, 1016 verschiebbar in Langlöchern 1017, 1018 an der Flanschplatte 1003 geführt ist. Zur Vereinfachung sind nur Tragarme 1008, 1009 der unteren Klemmeinrichtung 1005 dargestellt. Auf eine Darstellung von mit den Tragarmen 1008, 1109 verbundenen Spannbacken wurde zu Erhaltung der Übersichtlichkeit verzichtet, wobei diese analog zu der ersten Ausführungsvariante ausgeführt sind. Über eine weitere Schraube 1091 ist auch ein Stützkeil 1080 der Heckträgerkupplung 1001 in einem Langloch 1092 verschiebar an der Flanschplatte 1003 geführt. Zur weiteren Erläuterung ist in der Figur 24 die Flanschplatte 1003 von hinten gezeigt und die untere Klemmeinrichtung 1005 mit dem Stützkeil 1080 von der Seite gezeigt. Zusätzlich ist schematisch noch die Kugelkopfkupplung 701 abgebildet. Die Heckträgerkupplung 1001 umfasst als nicht dargestellte, trägerseitige Komponente noch eine als Gleiter ausgeführte Gegenflanscheinrichtung, welche auf die Flanschplatte 1003 aufschiebbar ist und an welcher eine nicht dargestellte Trageinrichtung befestigbar ist. Die vierte Ausführungsvariante ist dadurch gekennzeichnet, dass die fahrzeugseitige Komponente 1001a der Heckträgerkupplung 1001 in zwei Schritten montiert wird, wobei zunächst die obere Klemmeinrichtung 1005 an dem Kugelkopf 702 der Kugelkopfkupplung 701 montiert wird und dann die übrigen Bauteile der fahrzeugseitigen Komponente 1001a der Heckträgerkupplung 1001 als Einheit mit der Klemmeinrichtung 1005 und dem Hals 703 der Kugelkopfkupplung 701 verbunden werden. Als Verbindungsmittel zwischen der oberen Klemmeinrichtung 1005 und den übrigen Bauteile der fahrzeugseitigen Komponente 1001a der Heckträgerkupplung 1001 ist alternativ auch ein Klemmverbindungsmittel vorgesehen, welches insbesondere mittels eines Hebels bedient wird. Die Aufteilung der fahrzeugseitigen Komponente 1001a der Heckträgerkupplung 1001 in zwei Baugruppen bringt den Vorteil mit sich, dass bei der Montage der einzelnen Baugruppen jeweils ein geringeres Gewicht zu handhaben ist, als wenn die vollständige fahrzeugseitige Komponente in einem Schritt montiert wird.

Grundsätzlich ist es vorgesehen, die fahrzeugseitige Komponente der Heckträgerkupplung aus Metall, insbesondere aus Aluminium oder Edelstahlblech auszuführen. Hinsichtlich einzelner Bauteile ist es auch vorgesehen dies aus einem Kunststoff oder einem Kohlefaserstoff auszubilden, wobei insbesondere der Stützkeile und/oder die Klemmbacken entsprechend ausgeführt sind.

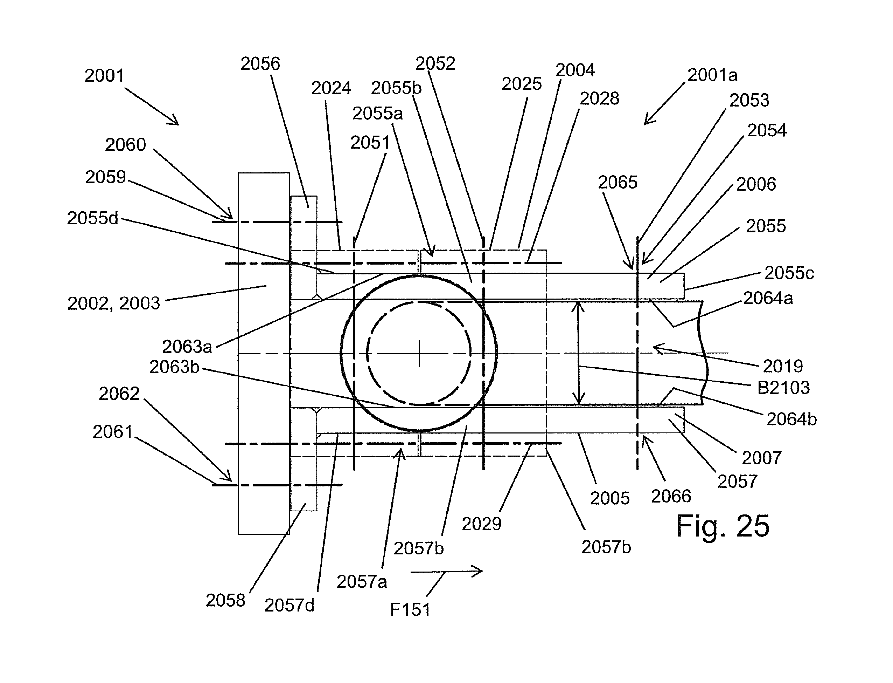

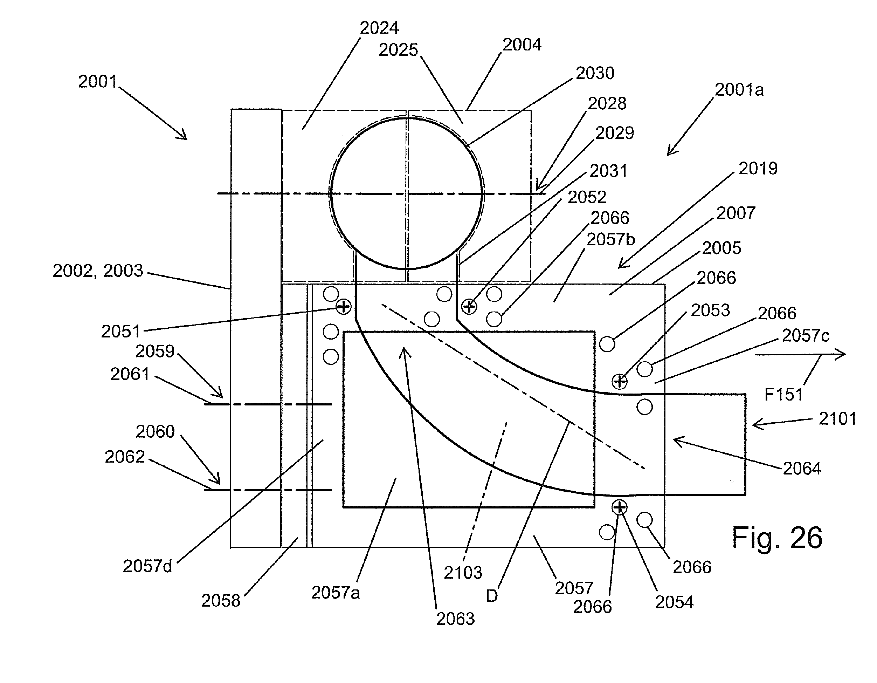

In den Figur 25 und 26 ist eine fünfte Ausführungsvariante einer fahrzeugseitigen Komponente 2001a einer Heckträgerkupplung 2001 in Draufsicht und Seitenansicht gezeigt, wobei diese an einer achten Ausführungsvariante einer Kugelkopfkupplung 2101 montiert ist. Die Komponente 2001a umfasst eine Flanscheinrichtung 2002, welche als Flanschplatte 2003 ausgebildet ist, eine obere Klemmeinrichtung 2004 (mit gestrichelten Linien und quasi durchsichtig gezeigt) und eine untere Klemmeinrichtung 2005.

Die beiden Klemmeinrichtungen 2004 und 2005 sind durch die Flanscheinrichtung 2002 starr verbunden. Hierbei umfasst die untere Klemmeinrichtung 2005 zwei Spannbacken 2006, 2007 und vier Verbindungsmittel 2051 - 2054.

Die beiden Spannbacken 2006, 2007 umfassen jeweils einen Rahmen 2055 bzw. 2057 und einen Befestigungsflügel 2056 bzw. 2058, wobei der Befestigungsflügel 2056 bzw. 2058 mit dem Rahmen 2055 bzw. 2057 zu einem L-förmigen Bauteil verschweißt ist. Hierbei ist jeder Rahmen 2055 bzw. 2057 jeweils mit einem vertikal ausgerichteten, hinteren Schenkel 2055d bzw. 2057d mit seinem Befestigungsflügel 2056 bzw. 2058 verbunden. Die Spannbacken 2006, 2007 sind mit der Flanschplatte 2003 über jeweils zwei als Schrauben ausgebildeten Verbindungsmittel 2059, 2060 sowie 2061, 2062 verbunden.

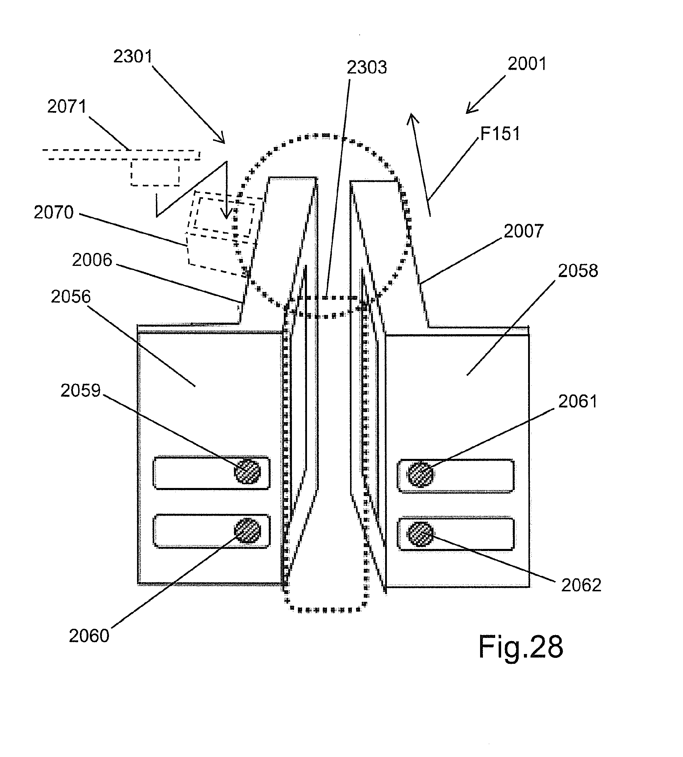

Hierbei sind die Verbindungsmittel 2059, 2060 sowie 2061, 2062 in den Befestigungsflügel 2056 bzw. 2058 in Langlöchern geführt (siehe Figur 28), so dass die Spannbacken 2006, 2007 quer zur einer Fahrtrichtung F151 an der Flanschplatte 2003 ausrichtbar sind. In einem zwischen den Spannbacken 2006, 2007 gebildeten Spannraum 2019 ist ein Hals 2103 der Kugelkopfkupplung 2101 aufgenommen. Dieser ist von der Seite jeweils durch ein in jedem Rahmen 2055, 2057 ausgebildetes Fenster 2055a bzw. 2057a erkennbar. Die Kugelkopfkupplung 2101 ist zur besseren Erkennbarkeit durchgängig mit dicken Linien gezeichnet, obwohl diese selbstverständlich z.B. in der Seitenansicht der Figur 26 durch den Rahmen 2057 bzw. die obere Klemmeinrichtung 2004 teilweise verdeckt ist.

Die Spannbacken 2006, 2007 weisen jeweils erste, kugelkopfnahe Kontaktabschnitte 2063a, 2063b auf, welche ein Kontaktabschnittpaar 2063 bilden, mit welchem diese einen ersten Abschnitt 2103a des Halses 2103 klemmend halten. Weiterhin weisen die Spannbacken 2006, 2007 jeweils zweite, kugelkopfferne Kontaktabschnitte 2064a, 2064b auf, welche ein Kontaktabschnittpaar 2064 bilden, mit welchem diese einen zweiten Abschnitt 2103b des Halses 2103 klemmend halten. Hierbei verbinden im Bereich jedes Kontaktabschnittpaares 2063, 2064 je zwei der Verbindungsmittel 2051, 2052 bzw. 2053, 2054 die Rahmen 2055, 2057 der Spannbacken 2006, 2007, so dass der Hals 2103 in diesen Bereichen zweimal ringartig von der aus den Spannbacken 2006, 2007 und den Verbindungsmitteln 2051 bis 2054 gebildeten unteren Klemmeinrichtung 2005 umschlossen ist. Das erste, kugelkopfnahe Kontaktabschnittpaar 2063 ist in einem Bereich der Flanschplatten 2006, 2007 ausgebildet, mit welchem diese an die obere Klemmeinrichtung 2004 angrenzt. Hierbei ist dieser Bereich an oberen, horizontalen Schenkeln 2055b, 2057b der Rahmen 2055, 2057 ausgebildet. Das zweite, kugelkopfferne Kontaktabschnittpaar 2064 ist in einem Bereich der Flanschplatten 2006, 2007 ausgebildet, mit welchem diese einem nicht dargestellten Fahrzeug gegenüberliegen. Hierbei ist dieser Bereich an in Fahrtrichtung F151 betrachtet vorderen, vertikalen Schenkeln 2055b, 2057b der Rahmen 2055, 2057 ausgebildet. Die Kontaktabschnittpaare 2063 und 2064 liegen sich auf einer Diagonale D diagonal gegenüber, wobei die Diagonale D in die Fahrrichtung F151 geneigt ist und in einer in die Fahrrichtung F151 verlaufenden Ebene liegt.

Der Kugelkopf 2102 der Kugelkopfkupplung 2101 ist zwischen Klemmbacken 2024, 2025 der oberen Klemmeinrichtung 2004 eingespannt. Hierzu sind die Spannschrauben 2028, 2029 mit ihren Köpfen an der Flanschplatte 2003 gelagert und laufen durch in der Flanschplatte 2003 und in der ersten Klemmbacke 2024 ausgeführte Durchgangsbohrungen bis in in der zweiten Klemmbacke 2025 ausgeführte Gewindebohrungen. Zwischen den beiden Klemmbacken 2024, 2025 der oberen Klemmeinrichtung 2004 ist ein kugelförmiger Aufnahmeraum 2030 ausgeführt, welcher sich über einen zylinderförmigen Aufnahmeraum 2031 in Richtung der unteren Klemmeinrichtung 2005 öffnet. Hierbei sind die Aufnahmeräume 2030, 2031 so auf den Kugelkopf 2102 und den Hals 2103 der Kugelkopfkupplung 2101 abgestimmt, dass diese in den Aufnahmeräumen 2030, 2031 bei gespannten Klemmbacken 2024, 2025 klemmend aufgenommen sind.

In den Spannbacken 2006 und 2007, welche spiegelbildlich ausgeführt sind, sind eine Vielzahl von Bohrungen 2065 bzw. 2066 (nur exemplarisch bezeichnet) ausgebildet, durch welche die Spannbacken 2006, 2007 mittels der Verbindungsmittel 2051 bis 2054 verbindbar sind.

Gemäß einer Ausführungsvariante ist es auch vorgesehen, dass die obere Klemmeinrichtung 2004 und die untere Klemmeinrichtung 2005 mit Abstand zueinander an der Flanscheinrichtung 2002 angeordnet sind.

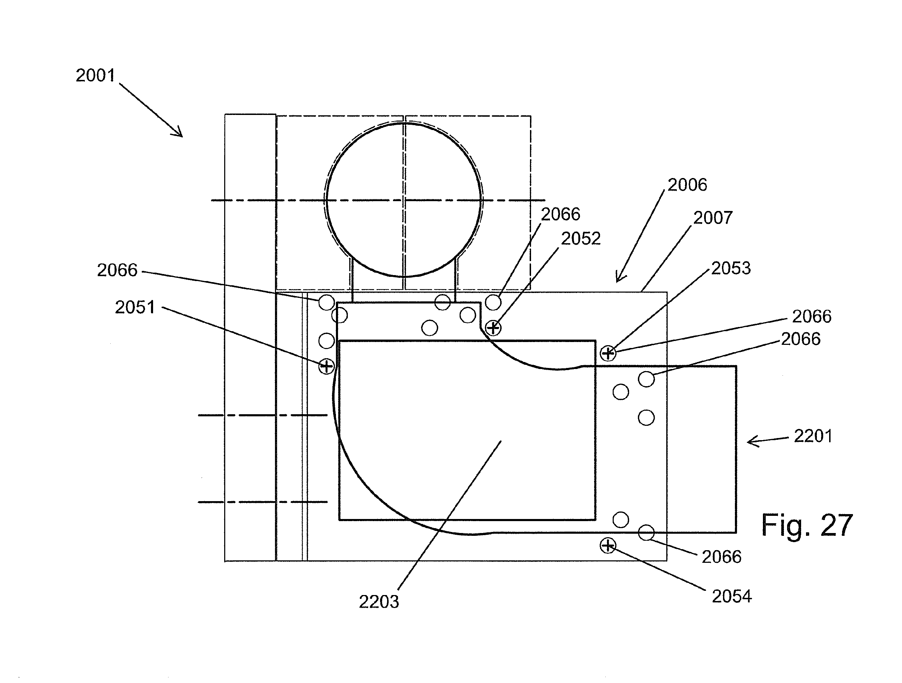

In der Figur 27 ist nun gezeigt wie die aus den Figuren 25 und 26 bekannte Heckträgerkupplung 2001 durch ein Versetzen der Verbindungsmittel 2051 bis 2054 in andere Bohrungen 2066 (nur exemplarisch bezeichnet) an einen Hals 2203 einer neunten Ausführungsvariante einer Kugelkopfkupplung 2201 anpassbar ist. Durch die beschriebene seitliche Einstellbarkeit der Spannbacken 2006, 2007 lässt sich die Heckträgerkupplung 2001 auch auf Kugelkopfkupplungen mit unterschiedlicher Halsbreite B2103 (exemplarisch in Figur 25 gezeigt) anpassen. Somit ist die Heckträgerkupplung 2001 individuell auf die unterschiedlichsten Ausführungen von Kugelkopfkupplungen mit genormtem Kugelkopf einstellbar.

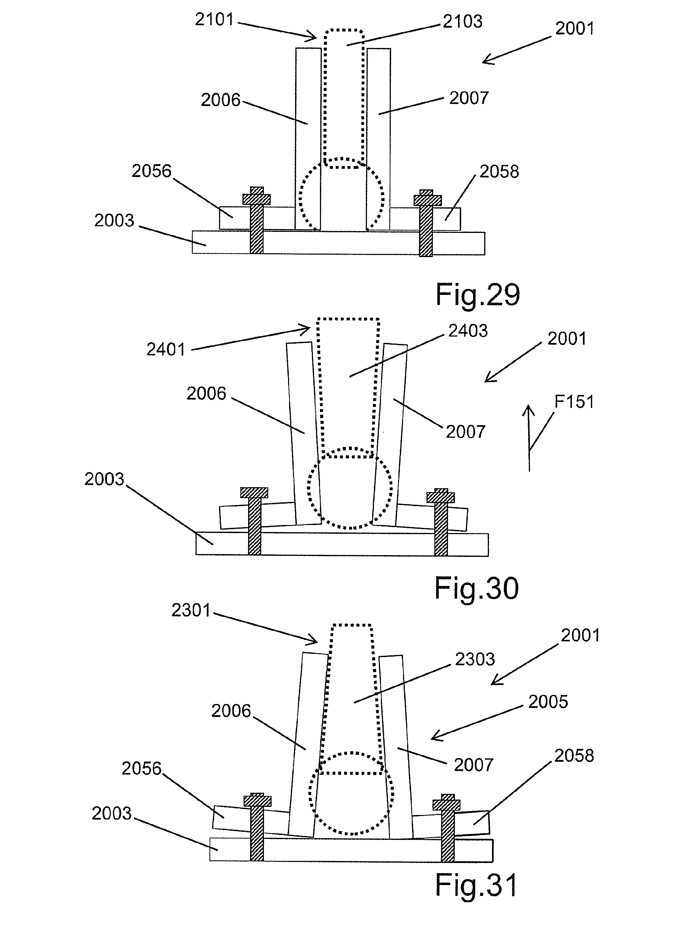

In der Figur 28 ist die aus den Figuren 25 bis 27 bekannte Heckträgerkupplung 2001 nochmals in schematischer, perspektivischer Ansicht gezeigt, wobei auf eine Darstellung der Flanschplatte und der oberen Klemmeinrichtung verzichtet wurde. In dieser Darstellung ist erkennbar wie sich die Spannbacken 2006 und 2007 auch an eine sich an einen in die Fahrtrichtung F151 verjüngenden Hals 2303 einer zehnten Ausführungsvariante einer Kugelkopfkupplung 2301 anlegen können. Diese Situation ist in der Figur 31 nochmals in schematischer Draufsicht gezeigt, wobei hier auch die Flanschplatte 2003 dargestellt ist. Selbstverständlich sind die Flanschplatten 2006 und 2007 durch die nicht dargestellten Verbindungsmittel der unteren Klemmeinrichtung 2005 derart zusammengehalten, dass diese beim Befestigen der unteren Klemmeinrichtung 2005 an der Flanschplatte 2003 ihre Orientierung zu dem Hals 2303 beibehalten. Gemäß einer nicht dargestellten Ausführungsvariante ist es zur Stabilisierung auch vorgesehen, zwischen die Flanschplatte 2003 und die Befestigungsflügel 2056 bzw. 2058 Stützmittel insbesondere in Form von Keilen einzulegen. Weiterhin ist es auch vorgesehen, dass jede Flanschplatte an der Spannbacke gelenkig um eine Drehachse gelagert ist und durch die Verbindungsmittel die Spannbacken jeweils in einer gewünschten Winkelstellung fixiert sind. In der Figur 28 sind auch die Verbindungsmittel 2059 bis 2062 im Schnitt erkennbar, mittels welcher die Spannbacken 2006 und 2007 mit der nicht dargestellten Flanschplatte verschraubt sind. Die Verbindungsmittel 2059 bis 2062 sind in den Befestigungsflügeln 2056, 2058 der Spannbacken in Langlöchern geführt, so dass die Spannbacken 2006, 2007 bei gelockerter Verbindung gegenüber der nicht dargestellten Flanschplatte horizontal verschiebbar sind. Gemäß einer nicht dargestellten Ausführungsvariante ist es vorgesehen, dass die Flanschplatte zur Realisierung einer vertikalen Verstellbarkeit zur Aufnahme der Verbindungsmittel der ersten Spannbacke und der zweiten Spannbacke jeweils ein vertikal verlaufendes Langloch aufweist. Die Verbindungsmittel umfassen in einem derartigen Fall zum Beispiel jeweils eine Schraube und eine Mutter.

In der Figur 28 ist an der Flanschplatte 2006 exemplarisch mit gestrichelten Linien noch eine Aufnahme 2070 dargestellt, welche in vergleichbarer Weise auch an der Flanschplatte 2007 vorgesehen sein kann. An dieser Aufnahme 2070 ist ein schematisch dargestellter Stützarm 2071 durch Einstecken befestigbar, welcher beispielsweise mit einem von der Heckträgerkupplung getragenen Fahrradträger verbunden ist. Mittels eines oder mehrere derartiger Stützarme 2071 ist eine direkte Abstützung des Fahrradträgers an der unteren Klemmeinrichtung 2005 möglich, durch welche dieser weiter stabilisiert ist. Entsprechend ist es vorgesehen, dass die Heckträgerkupplung 2001 wenigstens eine Aufnahme 2070 umfasst, wobei vorzugsweise jede Flanschplatte 2006, 2007 wenigstens eine Aufnahme 2070 umfasst. Hierbei ist jede Aufnahme 2070 mit einem Stützarm 2071 verbindbar, welcher mit einem von der Flanschplatte der Heckträgerkupplung getragenen Träger derart verbindbar ist, dass zwischen dem Träger und der zweiten Klemmeinrichtung 2005 unter Umgehung der Flanschplatte eine abstützende, mechanische Verbindung hergestellt ist.

In der Figur 29 ist analog zu der Figur 31 schematisch und in Draufsicht die Situation gezeigt, welche sich ergibt, wenn bei der in den Figuren 25 und 26 gezeigten Heckträgerkupplung 2001 der Hals 2103 der in den Figuren 25 und 26 gezeigten Kugelkopfkupplung 2101 eingespannt ist. Hier liegen die Befestigungsflügel 2056, 2058 der Spannbacken 2006, 2007 plan an der Flanschplatte 2003 an.

In der Figur 30 ist die aus den Figuren 25 bis 27 bekannte Heckträgerkupplung 2001 nochmals in schematischer Ansicht gezeigt, wobei auf eine Darstellung der oberen Klemmeinrichtung verzichtet wurde. In dieser Darstellung ist erkennbar wie sich die Spannbacken 2006 und 2007 auch an eine sich an einen in die Fahrtrichtung F151 verbreiternden Hals 2403 einer elften Ausführungsvariante einer Kugelkopfkupplung 2301 anlegen können.

Bei der in den Figuren 25, 26 und 27 gezeigten Heckträgerkupplung 2001 ist gemäß einer nicht dargestellten Ausführungsvariante ebenfalls eine Gegenflanscheinrichtung vorgesehen wie diese zu den Figuren 5 und 6 beschrieben ist.

### Bezugszeichenliste:

- 1: Heckträgerkupplung
- 1a: fahrzeugseitige Komponente von 1
- 1b: trägerseitige Komponente von 1
- 2: Flanscheinrichtung
- 3: Flanschplatte
- 4: obere Klemmeinrichtung
- 5: untere Klemmeinrichtung
- 6, 7: Spannbacke von 5
- 6a, 7a: Stirnfläche von 6, 7
- 6b, 7b: Unterseiten von 6, 7
- 8, 9: Tragarm von 5
- 10 - 13: Stellmittel von 5
- 14: U-förmiges Bauteil von 5
- 15, 16: Schraube von 5
- 17, 18: Langloch an 3
- 19: Spannraum von 5
- 20 - 23: Sicherungsschraube von 5
- 24: erste Klemmbacke von 4
- 25: zweite Klemmbacke von 4
- 26, 27: Schraube von 4
- 28, 29: Spannschraube von 4
- 30: kugelförmiger Aufnahmeraum von 4
- 31: zylinderförmiger Aufnahmeraum von 4
- 32: Gegenflanscheinrichtung von 1b
- 32a: von 34 abgewandte Seite
- 33: Gleiter
- 34: Schiene
- 35: Sicherungseinrichtung
- 36: Anschlag von 3
- 37: Gewindebohrung in 32, 33

- 101: Kugelkopfkupplung
- 102: Kugelkopf von 101
- 103: Hals von 101
- 103a: erster Abschnitt von 103
- 103b: zweiter Abschnitt von 103

- 151: Fahrzeug

- 201: zweite Kugelkopfkupplung
- 202: Kugelkopf
- 203: Hals
- 203a: erster Halsabschnitt
- 203b: zweiter Halsabschnitt

- 301: dritte Kugelkopfkupplung
- 302: Kugelkopf
- 303: Hals

- 401: vierte Kugelkopfkupplung
- 403: Hals

- 501: fünfte Kugelkopfkupplung
- 503: Hals
- 503b: zweiter Abschnitt

- 601: sechste Kugelkopfkupplung
- 603: Hals
- 603b: zweiter Abschnitt

- 701: siebte Kugelkopfkupplung
- 702: Kugelkopf
- 703: Hals

- 801: Heckträgerkupplung
- 801a: fahrzeugseitige Komponente
- 802: Flanscheinrichtung
- 803: Flanschplatte
- 805: untere Klemmeinrichtung
- 807: rechte Spannbacke
- 807a: Stirnfläche von 807
- 808, 809: Tragarm
- 810 - 813: Stellmittel von 805
- 814: U-förmiges Bauteil von 805

- 880: Stützkeil
- 881: untere Anlagefläche von 880
- 882: hintere Anlagefläche von 880
- 883: Stützfläche von 880
- 883a, 883b: Stützkante von 883
- 884a: gewölbte Fläche von 807
- 884b: ebene, schräg stehende Fläche von 807

- 901: Heckträgerkupplung
- 901a: fahrzeugseitige Komponente
- 905: untere Klemmeinrichtung
- 906, 907: Spannbacke von 905
- 910 - 913: Stellmittel von 905
- 908, 909: Tragarm von 905
- 980: Stützkeil

- 1001: Heckträgerkupplung
- 1001a: fahrzeugseitige Komponente
- 1002: Flanscheinrichtung
- 1003: Flanschplatte
- 1004: obere Klemmeinrichtung
- 1005: untere Klemmeinrichtung
- 1008, 1009: Tragarm
- 1015, 1016: Schraube
- 1017, 1018: Langloch
- 1024, 1025: erste und zweite Klemmbacke
- 1026, 1027: Schraube
- 1028, 1029: Spannschraube
- 1080: Stützkeil
- 1085: Überwurfeinrichtung
- 1086: Deckel
- 1087a - 1087d: Seitenwand
- 1088: U-förmig gebogene Bügelschraube
- 1089, 1090: Bohrung
- 1091: Schraube
- 1092: Langloch

- 2001: Heckträgerkupplung
- 2001a: fahrzeugseitige Komponente von 2001
- 2002: Flanscheinrichtung von 2001
- 2003: Flanschplatte
- 2004: obere Klemmeinrichtung von 2001
- 2005: untere Klemmeinrichtung von 2001
- 2006, 2007: Spannbacke von 2005

- 2019: Spannraum von 2005

- 2024, 2025: Klemmbacke von 2004

- 2028, 2029: Spannschraube

- 2030: kugelförmiger Aufnahmeraum von 2004
- 2031: zylinderförmiger Aufnahmeraum von 2004

- 2051 - 2054: Verbindungsmittel zw.2006 und 2007
- 2055: Rahmen von 2006
- 2055a: Fenster in 2055
- 2055b: oberer Schenkel von 2055
- 2055c: vertikaler, vorderer Schenkel von 2055
- 2055d: vertikaler, hinterer Schenkel von 2055
- 2056: Befestigungsflügel von 2006 bzw. 2055
- 2057: Rahmen von 2007
- 2057a: Fenster in 2057
- 2057b: oberer Schenkel von 2057
- 2057c: vertikaler, vorderer Schenkel von 2057
- 2057d: vertikaler, hinterer Schenkel von 2055
- 2058: Befestigungsflügel von 2007 bzw. 2057
- 2059, 2060: Verbindungsmittel zw. 2003 und 2055
- 2061, 2062: Verbindungsmittel zw. 2003 und 2057
- 2063: Kontaktabschnittpaar
- 2063a: erster Kontaktabschnitt an 2006
- 2063b: erster Kontaktabschnitt an 2007
- 2064: Kontaktabschnittpaar
- 2064a: zweiter Kontaktabschnitt an 2006
- 2064b: zweiter Kontaktabschnitt an 2007
- 2065: Bohrung in 2006
- 2066: Bohrung in 2007

- 2070: Aufnahme an 2006
- 2071: Stützarm zur Befestigung an 2070

- 2101: Kugelkopfkupplung (achte Variante)
- 2102: Kugelkopf von 2101
- 2103: Hals von 2101
- 2103a: erster Abschnitt von 2103
- 2103b: zweiter Abschnitt von 2103

- 2201: Kugelkopfkupplung (neunte Variante)
- 2203: Hals von 2201

- 2301: Kugelkopfkupplung (zehnte Variante)
- 2303: Hals

- 151: Fahrzeug

- B2103: Halsbreite von 2103
- D: Diagonale zw. 2063 und 2064
- F151: Fahrtrichtung
- K: Kupplungsstellung von 1
- L102: Längsachse von 102
- L103: strichpunktierte Linie
- M102: Mittelachse von 102
- M103a: Mittelachse von 103a
- M302: Mittelachse von 302
- P6a, P7a: erster Anlagepunkt an 103
- P6b, P7b: zweiter Anlagepunkt an 103
- Q102: Querachse von 102
- S6, S7: Schwenkachse von 6, 7

## Patentansprüche

1. Heckträgerkupplung (1; 801; 901; 1001; 2001),
- wobei die Heckträgerkupplung (1; 801; 901; 1001; 2004) an einer als Kugelkopfkupplung (101; 201; 301; 401; 501; 601; 701; 2101; 2201; 2301) ausgebildeten Anhängerkupplung eines Fahrzeugs (151) montierbar ist,
- wobei die Kugelkopfkupplung (101; 201; 301; 401; 501; 601; 701; 2101; 2201; 2301) einen Hals (103; 203; 303; 403; 503; 603; 703; 2103; 2203; 2303) und eine an einem ersten Ende des Halses (103; 203; 303; 403; 503; 603; 703; 210,; 2203; 2303) angeordneten Kugelkopf (102; 202; 302; 702; 2202) umfasst,
- wobei die Heckträgerkupplung (1; 801; 901; 1001; 2001) eine obere Klemmeinrichtung (4; 1004; 2004), eine untere Klemmeinrichtung (5; 805; 905; 1005; 2005) und mindestens eine die Klemmeinrichtungen (4; 5; 805; 905; 1004; 1005; 2004; 2005) starr verbindende Flanscheinrichtung (2; 802; 1002; 2002) umfasst,
- wobei die obere Klemmeinrichtung (4; 1004; 2004) an den Kugelkopf (102; 202; 302; 702; 2102) anklemmbar ist,
- wobei die untere Klemmeinrichtung (5; 805; 905; 1005; 2005) wenigstens zwei Spannbacken (6, 7; 906, 907; 2006, 2007) umfasst,
- wobei die Spannbacken (6, 7; 906, 907; 2006, 2007) im montierten Zustand der Heckträgerkupplung (1; 801; 901; 1001; 2001) an dem Hals (103; 203; 303; 403; 503; 2103) der Kugelkopfkupplung (101; 201; 301; 401; 501; 601; 701; 2101) anliegen,
**dadurch gekennzeichnet, dass** die obere Klemmeinrichtung (4; 1004; 2004) zwei Klemmbacken (24, 25; 1024, 1025; 2024, 2025) umfasst, wobei zwischen den Klemmbacken (24, 25; 1024, 1025; 2024, 2025) ein kugelförmiger Aufnahmeraum (30; 2030) und ein den kugelförmigen Aufnahmeraum (30; 2030) mit einer Umgebung verbindender zylinderförmiger Aufnahmeraum (31; 2031) ausgebildet ist.

2. Heckträgerkupplung nach Anspruch 1, **dadurch gekennzeichnet, dass** die Spannbacken (6, 7; 906, 907; 2006, 2007) im montierten Zustand der Heckträgerkupplung (1; 801; 901; 1001; 2001) an dem Hals (103; 203; 303; 403; 503; 2103) der Kugelkopfkupplung (101; 201; 301; 401; 501; 601; 701; 2101) derart anliegen, dass ein Nicken der Heckträgerkupplung (1; 801; 901; 1001; 2001) um eine quer zur Fahrtrichtung (F151) orientierte Querachse (Q102) des Kugelkopfes (102; 202; 302; 702; 2102), ein Wanken der Heckträgerkupplung (1; 801; 901; 1001; 2001) um eine in die Fahrtrichtung (F151) verlaufende Längsachse (L102) des Kugelkopfes (102; 202; 302; 702; 2102) und ein Gieren der Heckträgerkupplung (1; 801; 901; 1001; 2001) um die Mittelachse (M102; M302) des Kugelkopfes (102; 202; 302; 702; 2102) jeweils durch die beidseitige Anlage der Spannbacken (6, 7; 906, 907; 2006, 2007) an dem zweiten Abschnitt (103b; 203b; 503b; 2103b) des Halses (103; 203; 303; 403; 503; 2103) verhindert ist.

3. Heckträgerkupplung nach Anspruch 1 oder 2, **dadurch gekennzeichnet, dass** bei die Kugelkopfkupplung (101; 201; 301; 401; 501; 601; 701; 2101) derart ausgebildet ist, dass der Hals (103; 203; 303; 403; 503; 603; 703; 2103) einen ersten, kugelkopfnahen Abschnitt (103a; 203a; 2103a) umfasst, welcher eine gemeinsame Mittelachse (M103a; M102, M302) mit dem Kugelkopf (102; 202; 302; 702; 2102) aufweist, welche im Wesentlichen senkrecht zu einer Fahrtrichtung (F151) des Fahrzeugs (151) ausgerichtet ist, wobei der Hals (103; 203; 303; 403; 503; 603; 703; 2103) einen zweiten Abschnitt (103b; 203b; 503b; 2103b) umfasst, welcher auf den ersten Abschnitt (103a; 203a; 2103a) folgt und wenigstens abschnittsweise gebogen verläuft.

4. Heckträgerkupplung nach wenigstens einem der vorhergehenden Ansprüche, **dadurch gekennzeichnet, dass** jede Spannbacke (2106, 2107) wenigstens zwei Kontaktabschnitte (2063a, 2064a; 2063b, 2064b) umfasst, wobei sich die Kontaktabschnitte (2063a, 2064a; 2063b, 2064b) der beiden Spannbacken (2006, 2007) im montierten Zustand der Spannbacken (2006, 2007) spiegelbildlich als Kontaktabschnittpaare (2063; 2064) gegenüber liegen und wobei die Kontaktabschnittpaare (2063; 2064) im montierten Zustand der Spannbacken (2006, 2007) jeweils derart durch zwei Verbindungsmittel (2051 - 2054) verbunden sind, dass der Hals (2103) jeweils zwischen den beiden Verbindungsmitteln (2051, 2052; 2053, 2054) verläuft, wobei ein erstes Kontaktabschnittpaar (2063) im montierten Zustand insbesondere in einem ersten, kugelkopfnahen Abschnitt des Halses (2103) anliegt, wobei ein zweites Kontaktabschnittpaar (2064) im montierten Zustand insbesondere in einem zweiten kugelkopffernen Abschnitt des Halses (2103) anliegt, wobei die Spannbacken (2006, 2007) insbesondere als Rahmen (2055, 2057) ausgebildet sind, wobei jeder Rahmen (2055, 2057) insbesondere einen Befestigungsflügel (2056, 2058) umfasst, wobei der Befestigungsflügel (2056, 2058) insbesondere mit einem Schenkel (2055d, 2057d) des Rahmens (2055, 2057) verbunden ist.

5. Heckträgerkupplung nach Anspruch 4, **dadurch gekennzeichnet, dass** jede Spannbacke (2006, 2007) mit der Flanschplatte (2003) verbunden ist, wobei jede Spannbacke (2006, 2007) insbesondere über ihren Befestigungsflügel (2056, 2058) mit der Flanschplatte (2003) verbunden ist.

6. Heckträgerkupplung (1; 801; 901; 1001; 2001),
- wobei die Heckträgerkupplung (1; 801; 901; 1001; 2001) an einer als Kugelkopfkupplung (101; 201; 301; 401; 501; 601; 701; 2101; 2201; 2301) ausgebildeten Anhängerkupplung eines Fahrzeugs (151) montierbar ist,
- wobei die Kugelkopfkupplung (101; 201; 301; 401; 501; 601; 701; 2101; 2201; 2301) einen Hals (103; 203; 303; 403; 503; 603; 703; 2103) und eine an einem ersten Ende des Halses (103; 203; 303; 403; 503; 603; 703; 2103) angeordneten Kugelkopf (102; 202; 302; 702; 2102) umfasst, wobei der Hals (103; 203; 303; 403; 503; 603; 703; 2103; 2203) einen ersten, kugelkopfnahen Abschnitt (103a; 203a; 2103a) umfasst, welcher eine gemeinsame Mittelachse (M103a; M102, M302) mit dem Kugelkopf (102; 202; 302; 702; 2102) aufweist, welche im Wesentlichen senkrecht zu einer Fahrtrichtung (F151) des Fahrzeugs (151) ausgerichtet ist, wobei der Hals (103; 203; 303; 403; 503; 603; 703; 2103; 2203) einen zweiten Abschnitt (103b; 203b; 503b; 2103b) umfasst, welcher auf den ersten Abschnitt (103a; 203a) folgt und wenigstens abschnittsweise gebogen verläuft,
- wobei die Heckträgerkupplung (1; 801; 901; 1001; 2001) eine obere Klemmeinrichtung (4; 1004; 2004), eine untere Klemmeinrichtung (5; 805; 905; 1005; 2005) und mindestens eine die Klemmeinrichtungen (4; 5; 805; 905; 1004; 1005; 2004, 2005) starr verbindende Flanscheinrichtung (2; 802; 1002; 2002) umfasst,
- wobei die obere Klemmeinrichtung (4; 1004; 2004) an den Kugelkopf (102; 202; 302; 702; 2102) anklemmbar ist,
**dadurch gekennzeichnet,**
- **dass** die untere Klemmeinrichtung (5; 805; 905; 1005; 2005) wenigstens zwei Spannbacken (6, 7; 906, 907; 2006, 2007) umfasst,
- wobei die Spannbacken (6, 7; 906, 907; 2006, 2007) im montierten Zustand der Heckträgerkupplung (1; 801; 901; 1001; 2001) an dem zweiten Abschnitt (103b; 203b; 503b; 2003b) des Halses (103; 203; 303; 403; 503; 2103; 2203) der Kugelkopfkupplung (101; 201; 301; 401; 501; 601; 701; 2101; 2201; 2301) derart anliegen,
- **dass** ein Nicken der Heckträgerkupplung (1; 801; 901; 1001; 2001) um eine quer zur Fahrtrichtung (F151) orientierte Querachse (Q102) des Kugelkopfes (102; 202; 302; 702; 2102), ein Wanken der Heckträgerkupplung (1; 801; 901; 1001; 2001) um eine in die Fahrtrichtung (F151) verlaufende Längsachse (L102) des Kugelkopfes (102; 202; 302; 702; 2102) und ein Gieren der Heckträgerkupplung (1; 801; 901; 1001; 2001) um die Mittelachse (M102; M302) des Kugelkopfes (102; 202; 302; 702; 2102) jeweils durch die beidseitige Anlage der Spannbacken (6, 7; 906, 907; 2006, 2007) an dem zweiten Abschnitt (103b; 203b; 503b; 2103b) des Halses (103; 203; 303; 403; 503; 2103; 2203) verhindert ist.

7. Heckträgerkupplung nach einem der vorhergehenden Ansprüche, **dadurch gekennzeichnet, dass** die Flanscheinrichtung (2; 802; 1002; 2002) insbesondere eine Flanschplatte (3; 803; 1003; 2003) umfasst und diese bei montierter Heckträgerkupplung (1; 801; 901; 1001; 2001) in die Fahrtrichtung (151) betrachtet hinter den beiden Klemmeinrichtungen (4, 5; 805; 905; 1005; 2004; 2005) angeordnet ist.

8. Heckträgerkupplung nach einem der vorhergehenden Ansprüche, **dadurch gekennzeichnet, dass** die Heckträgerkupplung (1; 801; 901; 1001; 2001) weiterhin einen Stützkeil (880; 980; 1080) umfasst, welcher zwischen der Flanscheinrichtung (2; 802; 1002) und dem Hals (103; 203; 303; 403; 503; 603; 703) der Kugelkopfkupplung (101; 201; 301; 401; 501; 601; 701) angeordnet ist und an den Hals (103; 203; 303; 403; 503; 603; 703) der Kugelkopfkupplung (101; 201; 301; 401; 501; 601; 701) derart angeformt ist, dass der Hals (103; 203; 303; 403; 503; 603; 703) zu wenigstens zwei Stützkanten (883a, 883b) des Stützkeils (880; 980; 1080) in linienförmigem Kontakt steht oder dass der Hals (103; 203; 303; 403; 503; 603; 703) mit wenigstens einer Stützfläche (883) des Stützkeils (880; 980; 1080) in flächigem Kontakt steht.

9. Heckträgerkupplung nach wenigstens einem der vorhergehenden Ansprüche, **dadurch gekennzeichnet, dass** die untere Klemmeinrichtung (5; 805; 905; 1005) zusätzlich zu den beiden Spannbacken (6, 7; 906, 907) zwei mit der Flanscheinrichtung verbundene Tragarme (8, 9; 808, 809; 1008, 1009) und Stellmittel (10 - 13; 810 - 813; 910 - 913) umfasst, wobei jeder Tragarm (8, 9; 808, 809; 1008, 1009) mit zwei Stellmitteln (10, 11; 12, 13; 810, 811; 812, 813; 910, 911; 912, 913) eine der Spannbacken (6, 7; 906, 907) trägt und wobei jede Spannbacke (6, 7; 906, 907) mittels der Stellmittel (10 - 13; 810 - 813; 910 - 913) in ihrem Abstand zu dem jeweiligen Tragarm (8, 9; 808, 809; 1008, 1009) verstellbar ist.

10. Heckträgerkupplung nach Anspruch 6, **dadurch gekennzeichnet, dass** die obere Klemmeinrichtung (4; 1004; 2004) zwei Klemmbacken (24, 25; 1024, 1025; 2024, 2025) umfasst, wobei zwischen den Klemmbacken (24, 25; 1024, 1025; 2024, 2025) ein kugelförmiger Aufnahmeraum (30; 2030) und ein den kugelförmigen Aufnahmeraum (30; 2030) mit einer Umgebung verbindender zylinderförmiger Aufnahmeraum (31; 2031) ausgebildet ist.

11. Heckträgerkupplung nach Anspruch 1 oder 10, **dadurch gekennzeichnet, dass** die beiden Aufnahmeräume (30, 31; 2030, 2031) jeweils etwa zur Hälfte durch die erste und die zweite Klemmbacke (24, 25; 1024, 1025; 2024, 2025) gebildet sind, wobei die erste Klemmbacke (24; 1024; 2024) mit der Flanscheinrichtung (2; 802; 1002; 2002) fest verbunden ist und die zweite Klemmbacke (25; 1025; 2025) durch in der Flanscheinrichtung (2; 802; 1002; 2002) und in der ersten Klemmbacke (24; 1024; 2024) gelagerte Spannschrauben (28, 29; 1028, 1029) mit der ersten Klemmbacke (24; 1024; 2024) verbunden ist.

12. Heckträgerkupplung nach wenigstens einem der vorhergehenden Ansprüche, **dadurch gekennzeichnet, dass** jede Spannbacke (6, 7; 906, 907) mit wenigstens zwei Anlagepunkten (P6a, P6b; P7a, P7b) an dem Hals (103; 203; 303; 403; 503; 603; 703) der Kugelkopfkupplung (101; 201; 301; 401; 501; 601; 701) anliegt, wobei jeweils der erste Anlagepunkt (P6a; P7a) oberhalb einer in Draufsicht betrachteten maximalen Breite des Halses (103; 203; 303; 403; 503; 603; 703) der Kugelkopfkupplung (101; 201; 301; 401; 501; 601; 701) liegt, wobei jeweils der zweite Anlagepunkt (P6b; P7b) unterhalb einer in Draufsicht betrachteten maximalen Breite des Halses (103; 203; 303; 403; 503; 603; 703) der Kugelkopfkupplung (101; 201; 301; 401; 501; 601; 701) liegt und wobei jeder Anlagepunkt (P6a, P6b; P7a, P7b) beabstandet zu der Mittelachse (M102; M302) des Kugelkopfes (102; 202; 302; 702) liegt.

13. Heckträgerkupplung nach wenigstens einem der vorhergehenden Ansprüche, **dadurch gekennzeichnet, dass** zu dem Hals (103; 203; 303; 403; 503; 603; 703) der Kugelkopfkupplung (101; 201; 301; 401; 501; 601; 701) weisende Stirnflächen (6a, 7a; 807a) der Spannbacken (6, 7; 906, 907) in wenigstens einem Abschnitt durch eine ebene, schräg stehende Fläche (884b) oder eine gewölbte Fläche (884a) gebildet sind, welche einem zu kontaktierenden Oberflächenverlauf des Halses (103; 203; 303; 403; 503; 603; 703) der Kugelkopfkupplung (101; 201; 301; 401; 501; 601; 701) angenähert oder angepasst ist.

14. Heckträgerkupplung nach Anspruch 9, **dadurch gekennzeichnet, dass** zwischen den Stellmitteln (10 - 13; 810 - 813; 910 - 913) und den Spannbacken (6, 7; 906, 907) jeweils Gelenke ausgebildet sind, so dass die Spannbacken (6, 7; 906, 907) gegenüber den durch die jeweils zwei Stellmittel definierten Verfahrachsen verkippbar sind.

15. Heckträgerkupplung nach wenigstens einem der vorhergehenden Ansprüche, **dadurch gekennzeichnet, dass** die Heckträgerkupplung (1; 801; 901; 1001; 2001) zusätzlich zu der Flanscheinrichtung (2; 802; 1002; 2002) eine Gegenflanscheinrichtung (32) umfasst, welche mit der Flanscheinrichtung (2; 802; 1002; 2002) insbesondere durch eine lineare Aufschiebebewegung formschlüssig kuppelbar ist und wobei die Gegenflanscheinrichtung (32) mit einem Heckträger verbindbar ist.
